# FASCICULE DE BREVET EUROPEEN

(11) **EP 1 173 698 B1**
(45) Date de publication et mention de la délivrance du brevet: **05.04.2006**
(21) Numéro de dépôt: 00927307.9
(22) Date de dépôt: 28.04.2000
(51) Int. Cl.: F16L 1/19, F16L 1/20, B63B 35/03

(54) **DISPOSITIF POUR LE RACCORDEMENT ET LA POSE DES PARTIES SUCCESSIVES D'UNE CONDUITE SOUS-MARINE DEPUIS UN NAVIRE ET SES APPLICATIONS**
VORRICHTUNG FÜR DIE VERBINDUNG UND DIE VERLEGUNG DER AUFEINANDERFOLGENDEN TEILE EINER UNTERWASSERLEITUNG VON EINEM SCHIFF UND DEREN VERWENDUNGEN
DEVICE FOR CONNECTING AND LAYING SUCCESSIVE PARTS OF A SUBMARINE PIPELINE FROM A BOAT AND USES THEREOF

(30) Priorité: 30.04.1999 FR 9905534; 16.09.1999 FR 9911584
(43) Date de publication de la demande: 23.01.2002
(73) Titulaire: SAIPEM S.A., 78180 Montigny-le-Bretonneux (FR)
(72) Inventeur: ROGER, Pierre, F-92270 Bois-Colombes (FR); ROL, François-Xavier, F-28110 Luce (FR); RUEDA, Christian, F-94300 Vincennes (FR); BAYLOT, Michel, F-13008 Marseille (FR)
(74) Mandataire: Schrimpf, Robert
(86) Numéro de dépôt international: PCT/FR2000/001155
(87) Numéro de publication internationale: WO 2000/066923

(56) Documents cités:
- EP-A- 0 262 545
- EP-A- 0 661 488
- GB-A- 2 095 787
- GB-A- 2 310 267
- US-A- 3 680 322

## Description

La présente invention concerne le raccordement et la pose des parties successives d'une conduite sous-marine depuis un navire effectuant des opérations d'installation, notamment par de très grandes profondeurs d'eau.

Elle s'applique à toute conduite destinée à véhiculer un fluide, un courant électrique, des signaux optiques ou des informations et notamment à des conduites tubulaires rigides ou flexibles, des ombilicaux et des câbles électriques, dont le comportement dans la hauteur de la tranche d'eau est tout à fait similaire quelle que soit la rigidité transversale de la conduite, dès lors que la hauteur de ladite tranche d'eau dépasse 500 à 600 mètres ; la courbure prise par la conduite dans de telles conditions, quelle que soit sa nature, étant sensiblement équivalente à la courbe mathématique appelée chaînette, car les effets de la rigidité de la conduite sur la courbure résultante sont du deuxième ordre par rapport aux effets de la pesanteur, dans ces conditions d'opérations.

Le mot « navire » désigne tout ensemble flottant déplaçable apte à permettre la pose d'une conduite.

Le raccordement des parties de conduite nécessite de maintenir la partie de conduite déjà immergée, de présenter à l'extrémité de cette partie la nouvelle partie de conduite, de faire fonctionner des outils d'assemblage et de guider la conduite pour la pose en mer.

On connaît des dispositifs de pose qui comprennent, sur un navire, (A) un support à inclinaison variable équipé de moyens pour supporter le poids de la partie de conduite déjà immergée et maintenir à la demande dans un plan d'assemblage l'extrémité émergée de cette partie de conduite, de moyens pour recevoir une nouvelle partie de conduite selon l'axe longitudinal de pose et l'amener dans ledit plan d'assemblage, et de moyens de guidage, (B) des moyens constituant un axe horizontal de pivotement du support sur le navire en sorte que le support soit inclinable selon l'inclinaison qui convient pour la pose en mer de la conduite, (C) des moyens pour commander le pivotement du support et pour le maintenir dans la position inclinée requise, (D) des moyens pour déposer sur le support la nouvelle partie de conduite, et (E) une station de travail équipée de moyens pour réaliser l'assemblage des deux parties de conduite et des travaux annexes.

Des exemples de tels dispositifs sont décrits notamment dans les brevets US 3 680 322 ; US 5 421 675 ; US 5 464 307, US 3 860 122.

Dans ces réalisations, la station de travail est portée par le support et des moyens sont requis pour que cette station conserve l'attitude qui convient, en général une position sensiblement horizontale au poste d'assemblage, quelle que soit l'inclinaison du support.

En effet, l'inclinaison du support pour la pose peut varier selon les applications car elle dépend de différents facteurs dont notamment la nature de la canalisation à poser et la profondeur de pose.

On connaît d'autre part, un dispositif qui comprend un support de conduite et une station de travail qui n'est pas portée par le support mais par le navire, le support étant fixe et les moyens pour supporter le poids de la partie de conduite déjà immergée avant la réalisation de l'assemblage étant portés par la station de travail (EP 0 478 742).

L'un des buts de l'invention est de permettre l'utilisation d'une station de travail portée par le navire et non par le support, dans le cas d'un support à inclinaison variable, ce qui procure de nombreux avantages (simplification, efficacité, etc.).

On y parvient selon la présente invention en disposant l'axe de pivotement du support en sorte qu'il coupe l'axe longitudinal de pose sensiblement dans ledit plan d'assemblage.

Dans ces conditions, la situation de la station de travail pour le travail est sensiblement indépendante de l'inclinaison du support et la station de travail peut être portée par le navire à un emplacement déterminé.

Dans la pratique, il peut être néanmoins souhaitable de doter la station de travail d'une certaine latitude de déplacement sur le navire pour s'adapter le mieux possible à l'inclinaison du support.

Une possibilité de déplacement peut aussi être souhaitable pour changer la nature du travail et par exemple, pour passer d'une opération d'assemblage à une opération de revêtement ou de contrôle.

Une possibilité de déplacement peut enfin être souhaitable pour escamoter la station, pour ne pas gêner le basculement du support lorsque le support doit être rabattu sur le pont pour tenir compte de l'état de la mer ou en vue d'un déplacement important du navire.

L'assemblage par soudage est préféré mais l'invention n'est pas limitée à ce mode d'assemblage. Il est notamment prévu, en variante, de réaliser l'assemblage par vissage, par emboîtement ou par un raccord d'assemblage.

Des réalisations conformes à la présente invention présentent encore une ou plusieurs des caractéristiques suivantes :
- des moyens présentant une courbure pour guider sur le support une conduite continue provenant d'un tambour,
- une poutre et des moyens pour ajuster et maintenir la poutre en position lorsqu'elle est en position inclinée, la poutre étant en outre équipée de moyens présentant une courbure pour guider vers le support, une conduite continue provenant d'un tambour, lorsque la poutre est dans cette position,
- les moyens présentant une courbure comporte une goulotte,
- les moyens présentant une courbure comporte une poulie,
- la poutre présente une extrémité supérieure en forme de U,
- les moyens pour maintenir la poutre en position comportent des moyens de verrouillage de la poutre au support qui comprennent une liaison structurelle, associé à un verrou,
- le support est une tour en poutrelles métalliques conformée pour permettre un déplacement de la station de travail au travers ou au sein du support,
- la station de travail est déplaçable sur des rails solidaires du navire,
- la station de travail est déplaçable parallèlement à l'axe longitudinal du navire,
- la station de travail comporte un plancher pour le déplacement du personnel et un plafond et/ou une structure en plafond qui porte des moyens requis pour l'alimentation de têtes de soudage montées à déplacement sensiblement dans le plan d'assemblage,
- la station de travail comporte un plafond et un plancher qui présentent des échancrures pour le passage de l'extrémité de la partie de conduite immergée et de la nouvelle partie de conduite,
- la station de travail comporte un carrousel tournant muni de moyens pour l'alimentation de têtes de soudage,
- le carrousel tournant est porté par un plafond de la station de travail ou par une structure en plafond,
- le carrousel est déplaçable à translation dans la station entre une position de service et une position d'escamotage,
- la station de travail comprend un carrousel équipé de moyens pour réaliser ledit assemblage et un carrousel équipé de moyens pour réaliser des revêtements de la zone d'assemblage, ces deux carrousels étant portés par des structures fixées en plafond ou à un plafond de la station et déplaçables de façon à être substituables l'un par l'autre,
- la station de travail comporte des moyens de contrôle solidaires d'un bras articulé lui-même solidaire d'un support fixe,
- la station de travail est une cabine dont la position selon l'axe du navire peut être ajustée en fonction de l'inclinaison de la tour,
- le dispositif comporte deux stations de travail équipées respectivement de moyens pour réaliser l'assemblage et de moyens pour réaliser un revêtement de l'assemblage, ces deux stations étant mobiles pour pouvoir être substituées l'une à l'autre en position de service.

L'invention s'applique entre autres à la pose d'une conduite constituée de tronçons rectilignes ou «rames» (string) assemblés et posés de proche en proche, chaque tronçon pouvant lui-même être constitué de plusieurs longueurs de conduite élémentaires assemblées pour constituer une rame. Ces longueurs élémentaires sont en général de 12 mètres.

Il est avantageux, pour déposer sur le support une nouvelle rame, d'utiliser une poutre apte à supporter la nouvelle rame et à pivoter autour d'un axe sensiblement horizontal de pivotement de la poutre, de préférence l'axe de pivotement de la poutre coïncidant avec l'axe de pivotement du support, des moyens étant prévus pour commander le basculement de la poutre entre une position de départ sensiblement horizontale qui permet de poser ou de constituer la rame sur la poutre à partir d'un stock et une position inclinée de transfert où la rame peut être transférée au support, lequel aura été préalablement amené dans sa position inclinée de service.

Cette poutre est par exemple articulée sur l'axe de pivotement du support ou est astreinte à se déplacer en suivant un arc de cercle centré sur cet axe.

Ces deux exemples de réalisation seront décrits plus loin.

L'invention s'applique aussi à la pose d'une conduite constituée de tronçons rigides ou non rigides enroulés sur un distributeur et déroulés à la demande sur le support, avec redressement éventuel du tronçon à une configuration rectiligne en tête du support.

Un autre aspect de l'invention concerne l'utilisation de tensionneurs aptes à serrer une conduite, en amont de l'axe de pivotement, sur un support de conduite monté à pivotement sur un navire pour pouvoir prendre toute inclinaison requise pour la pose de la conduite.

Des tensionneurs aptes à serrer une conduite et à lui appliquer une force de retenue dirigée vers le haut selon l'axe de la conduite sont couramment utilisés par l'homme du métier et sont disponibles sur le marché. On citera par exemple les tensionneurs construits par Huisman Special Lifting Equipment b.v. et les publications US 5 823 712 et WO 98 50719.

Selon la présente invention, les tensionneurs sont montés déplaçables sur le support entre deux positions correspondant à un axe de pose principal et à un axe de pose secondaire décalé mais parallèle à l'axe principal.

Il est ainsi possible d'utiliser les tensionneurs pour tenir et guider une partie de conduite ou une conduite selon l'un ou l'autre des axes de pose.

Il est aussi possible, en combinaison avec un autre dispositif, utilisé pour tenir une conduite selon un premier axe de pose, de tenir et de guider grâce aux tensionneurs une conduite auxiliaire, par exemple un câble, selon un axe de pose parallèle.

Ces tensionneurs peuvent donc avantageusement être utilisés en combinaison avec un dispositif de pose conforme au premier objet de l'invention.

Dans une réalisation particulière, le dispositif comprend une poutre apte à supporter la nouvelle partie de conduite, cette poutre étant montée sur le navire de façon à pouvoir pivoter autour dudit axe de pivotement, et étant munie de moyens de déplacement aptes à maintenir la nouvelle partie de conduite sur la poutre et à être déplacés le long de celle-ci, pour amener la nouvelle partie de conduite en position d'assemblage, dans le plan d'assemblage.

Avantageusement, les moyens de déplacement sont munis de moyens de serrage retenant la nouvelle portion de conduite, lors de la manoeuvre de relevage de la poutre. Ces moyens de déplacement permettent en outre de manoeuvrer précisément la nouvelle portion de conduite, pendant sa descente en position d'assemblage.

Dans une réalisation particulière, le dispositif comprend une poutre apte à supporter une conduite, cette poutre étant montée sur le navire de façon à pouvoir pivoter autour d'un axe sensiblement horizontal de pivotement de la poutre coïncidant de préférence avec l'axe de pivotement du support et comportant des moyens d'amenée et de guidage d'une conduite continue, ces moyens d'amenée présentant une courbure telle que la conduite peut être guidée sur le support de conduite sans être endommagée.

Avantageusement, ces moyens d'amenée comprennent une goulotte ou une poulie.

Ainsi, l'installation, à la grue de bord, des moyens d'amenée sur la poutre plutôt que sur le support, se trouve facilitée. De même, l'installation, sur les moyens d'amenée, à la grue de bord, et au démarrage de la pose, de pièces lourdes, telles qu'un connecteur lourd associé à une nouvelle portion de conduite, lorsque la poutre se trouve sur le pont du navire, est facilitée.

Avantageusement, l'extrémité supérieure de la poutre, maintenant la goulotte ou la poulie, est en forme de U, pour que la goulotte ou la poulie soit centrée. On supprime ainsi les effets de torsion sur la poutre.

Avantageusement, la poutre est verrouillée sur le support, par une liaison structurelle associée à un verrou. Ceci permet de relâcher la tension du câble destiné à mouvoir la poutre, pendant les opérations de pose de la conduite.

D'autres aspects, caractéristiques et avantages de la présente invention, ressortiront mieux à la lecture de la description qui va suivre, faite de manière illustrative et non limitative, en référence aux dessins annexés sur lesquels le support est une tour.

Sur les dessins :
- la figure 1 est un schéma en vue de côté de la pose en J d'une conduite par grande profondeur,
- la figure 2 est une vue de côté de la phase d'approche, en fin de pose en J d'une conduite, du navire près d'un corps flottant,
- la figure 3 est une vue de côté du navire équipé de la tour de pose et de ses principaux accessoires de pose de conduites rigides,
- la figure 4 est une vue similaire à la figure 3 montrant la conduite en suspension,
- la figure 5 est une vue de côté du navire équipé de la tour de pose et de ses principaux accessoires de pose de conduites rigides,
- la figure 6 est une vue de dessus relativement à la figure 5 détaillant la poutre supportant une poulie ou une goulotte d'amenée de conduite flexible,
- les figures 7, 8 et 9 sont des vues de côté du navire équipé de la tour, détaillant une goulotte d'amenée d'une conduite flexible, respectivement en position de stockage sur le pont du navire, puis installée sur la poutre et enfin recevant ladite conduite flexible équipée d'un connecteur d'extrémité,
- la figure 10 est une vue de côté équivalentes aux figures 7, 8 et 9, détaillant une opération de pose d'une conduite flexible à travers la tour, la poutre étant en position relevée,
- les figures 11 et 12 sont des vues de côté du navire équipé de la tour, détaillant une poulie d'amenée d'une conduite flexible respectivement installée sur la poutre et en opération de pose, la poutre étant en position relevée,
- la figure 13 est une vue de côté du navire équipé de la tour, détaillant un treuil d'abandon et un chariot de manutention des accessoires de conduites sous-marine,
- la figure 14 est une vue de côté du navire équipé de la tour et d'une goulotte d'amenée d'une conduite flexible continue, vers des tensionneurs situés sur l'axe secondaire de pose,
- la figure 15 est une vue de côté du navire équipé de la tour et d'une poulie d'amenée d'un câble électrique continu, vers des tensionneurs situés sur l'axe principal de pose,
- la figure 16 est une vue de côté du navire équipé de la tour, d'une poulie d'amenée d'une conduite rigide continue posée en déroulé et passant dans un système de redressement avant d'entrer dans des tensionneurs,
- la figure 17 est une coupe de la tour par un plan transversal en vue de dessus associé à une vue de dessus partielle d'un tensionneur en deux parties pouvant s'écarter latéralement,
- la figure 18 est une vue similaire à la figure 17 dans laquelle le tensionneur est en forme de U,
- la figure 19 est une vue de côté en coupe d'une cabine de soudage associée à une vue de côté des équipements internes,
- la figure 20 est la vue de dessus relative à la figure 19,
- la figure 21 est une vue en plan en vue de dessous, d'un carrousel en fer-à-cheval situé en plafond d'une cabine de soudage,
- la figure 22 est une vue similaire à la figure 21 dans laquelle le carrousel a tourné d'un angle β,
- la figure 23 est une vue de côté d'une cabine de soudage pendant l'assemblage,
- la figure 24 est une vue de côté du moufle élévateur détaillant l'articulation des bras au moyen d'un vérin hydraulique,
- la figure 25 est la vue de côté relative à la figure 24 détaillant les deux bras ainsi que le préhenseur à coins de serrage,
- la figure 26 est une section en vue de dessus du préhenseur décrivant la porte frontale et son ouverture,
- la figure 27 est une vue de coupe d'une station de travail fixe regroupant en une seule cabine les moyens de soudage d'inspection et de revêtement,
- la figure 28 est la vue de dessus relative à la figure 27,
- la figure 29 est une épure en vue de côté montrant un mode de réalisation d'un axe de rotation virtuel pour que la poutre se redresse en décrivant un arc de cercle centré sur ledit axe virtuel.

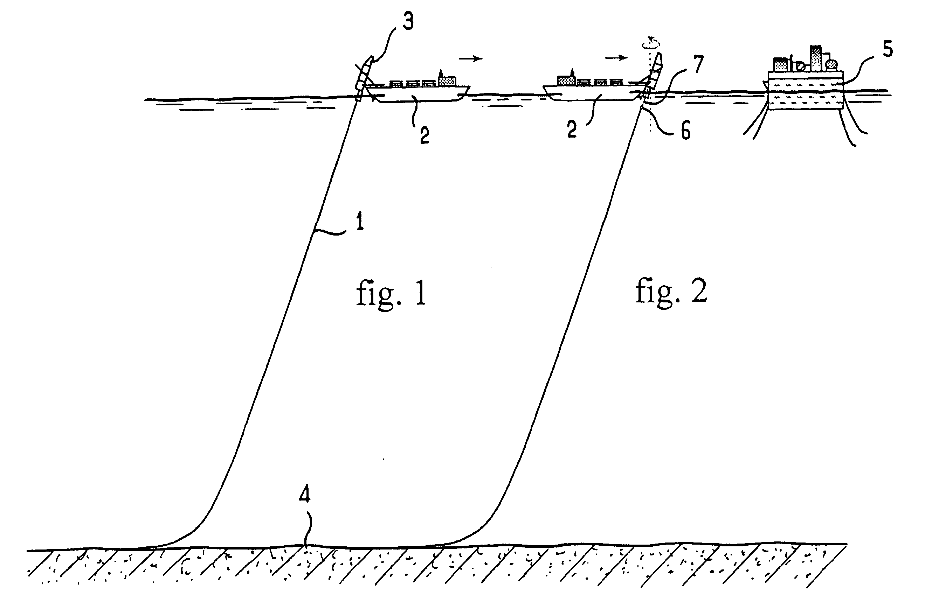

La figure 1 est un schéma en vue de côté de la pose en J d'une conduite 1 à partir d'un navire de pose 2 équipé d'une tour 3 inclinée par rapport à l'horizontale, de manière à ce que l'axe de ladite tour soit tangent à la courbe en chaînette formée par la conduite en suspension depuis ledit navire jusqu'au fond de la mer 4 sur lequel elle repose. La chaînette est la courbe mathématique que prend une ligne de faible raideur lorsqu'elle est soumise à l'attraction terrestre. Sur de très grandes hauteurs d'eau, dépassant par exemple 800m, le comportement d'un câble, d'un flexible ou d'une conduite en acier de forte épaisseur auront un comportement similaire, car la rigidité de la ligne n'entre plus en jeu dès lors que la longueur est importante : en effet, pour de grandes portées, la raideur d'une conduite reste faible quelle que soit la rigidité de la section transversale de la ligne.

Ainsi, sur de grandes hauteurs d'eau, pour une même hauteur d'eau, pour une même inclinaison au niveau de la sortie de la tour 10 et en l'absence de courants, la courbure générale d'une ligne sera identique à la chaînette mathématique, quelle que soit la nature de la ligne.

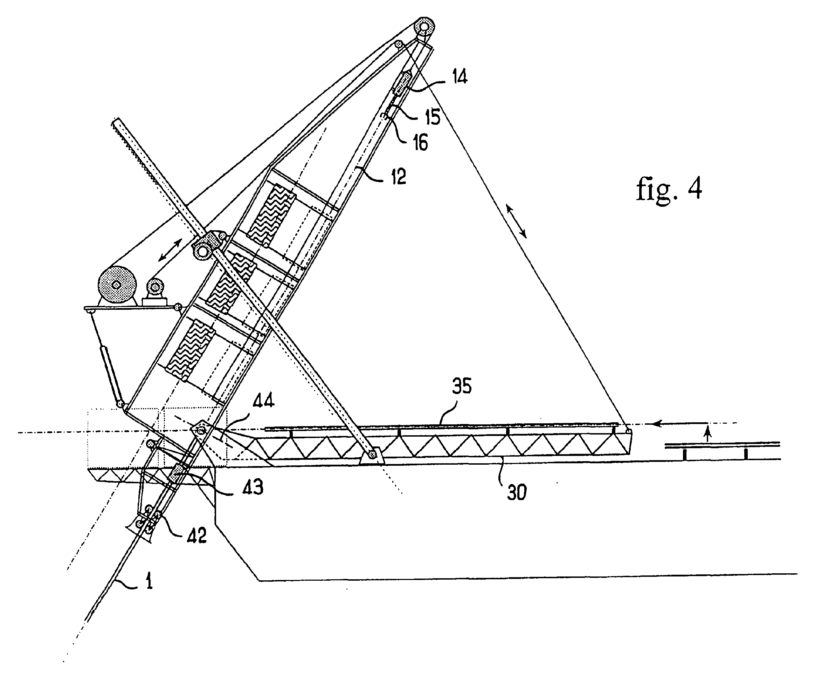

La figure 2 est une vue de côté détaillant la phase d'approche du navire 2 près d'une barge flottante 5, maintenue en position par un ancrage non représenté. Le navire 2 a effectué une rotation de 180 degrés autour d'un axe vertical tangent à son arrière. Avant de commencer cette opération, la conduite en suspension a été équipée d'une tête d'abandon 6, représentée plus en détails sur la figure 4, et reliée à un treuil d'abandon 8 non représenté sur la figure 1, mais représenté sur la figure 4, par l'intermédiaire d'un câble 7.

La conduite étant ainsi libérée de la tour, le navire peut effectuer une rotation de 180 degrés autour de son arrière et modifier l'angle d'inclinaison de la tour sans risquer d'endommager la conduite, dans la mesure où les déplacements du navire sont parfaitement contrôlés. Pour effectuer cette manoeuvre avec toute la précision nécessaire, on utilise avantageusement un navire à positionnement dynamique.

Une fois le navire 2 retourné et après ajustement correct de l'inclinaison de la tour 3, la conduite est relevée au sein de la tour puis, après maintien de la conduite en suspension, la tête d'abandon ainsi que le câble de traction sont déconnectés et la pose de la conduite est poursuivie vers la barge 5.

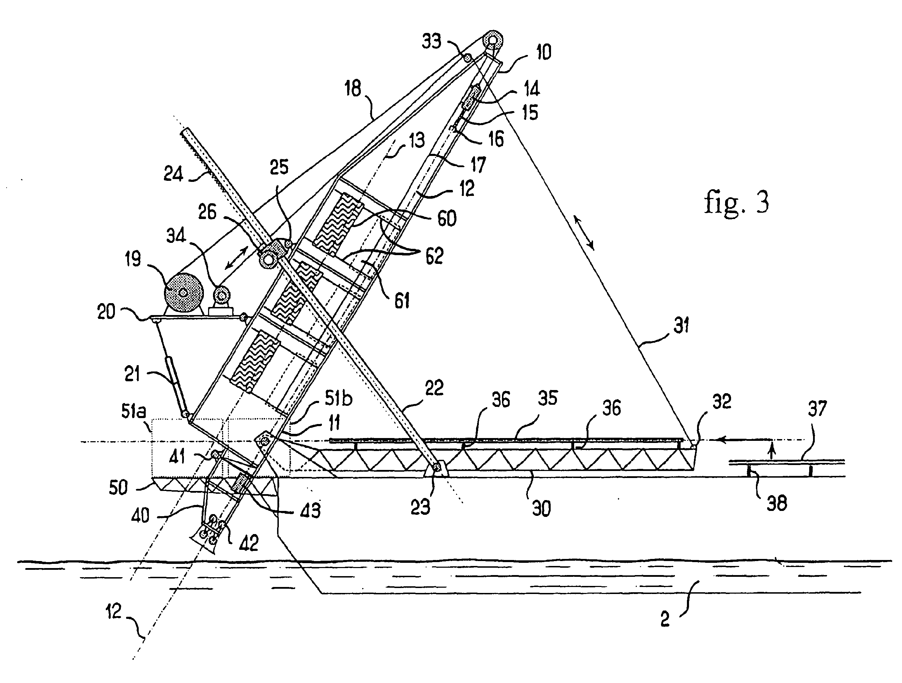

La figure 3 est une vue de côté de l'arrière du navire 2 équipé de la tour 10 constituée d'une structure principale en poutres métalliques et d'une structure secondaire de renforcement non représentée.

Cette tour est articulée, près de sa base, autour d'un axe de pivotement sensiblement horizontal 11, parallèle et transversal au pont du navire. Ledit axe coupe l'axe longitudinal 12 de pose des conduites 1.

Un deuxième axe longitudinal de pose 13, se trouve déporté par rapport à l'axe 12, est prévu pour la pose de lignes flexibles de grande longueur continue, telles que des conduites flexibles, des câbles électriques ou des ombilicaux, ou encore de lignes semi-rigides telles que les conduites tubulaires en déroulé.

Le dispositif comprend une poutre 30 sensiblement parallèle au pont du navire 2 et possédant à son extrémité gauche un axe d'articulation coïncidant avec l'axe d'articulation de la tour sur le navire. Proche de son autre extrémité, se trouve le point d'attache 32 d'un câble 31 tourné autour d'une poulie de renvoi 33 située vers le sommet de la tour 10, et relié à un treuil 34 solidaire de la plate-forme 20. La poutre peut être ainsi manoeuvrée et ramenée vers la tour pour transférer une rame 35 reposant sur une série de supports 36 prévus sur la poutre et maintenus en position par un dispositif non représenté, tel que des pinces. Cette rame 35 est formée à partir de longueurs unitaires élémentaires assemblées entre elles par soudage dans la position 37. La rame en préparation 37 est supportée par des dispositifs 38 permettant d'effectuer un alignement correct des divers éléments et de les maintenir pendant toutes les opérations d'assemblage.

La tour est équipée de moyens qui permettent d'ajuster son inclinaison en fonction du type de conduite à poser. Cet ajustement est réalisé à l'aide d'un moto-réducteur 26 articulé en 25 sur la structure principale de la tour 10, l'arbre de sortie dudit moto-réducteur étant équipé d'un engrenage agissant sur la crémaillère 24 d'un bras 22 articulé en 23 sur un support solidaire du pont du navire. Ainsi, en agissant sur le moto-réducteur, on modifie l'angle que fait l'axe de la tour avec l'axe du navire et l'on peut ajuster l'angle de pose de la conduite.

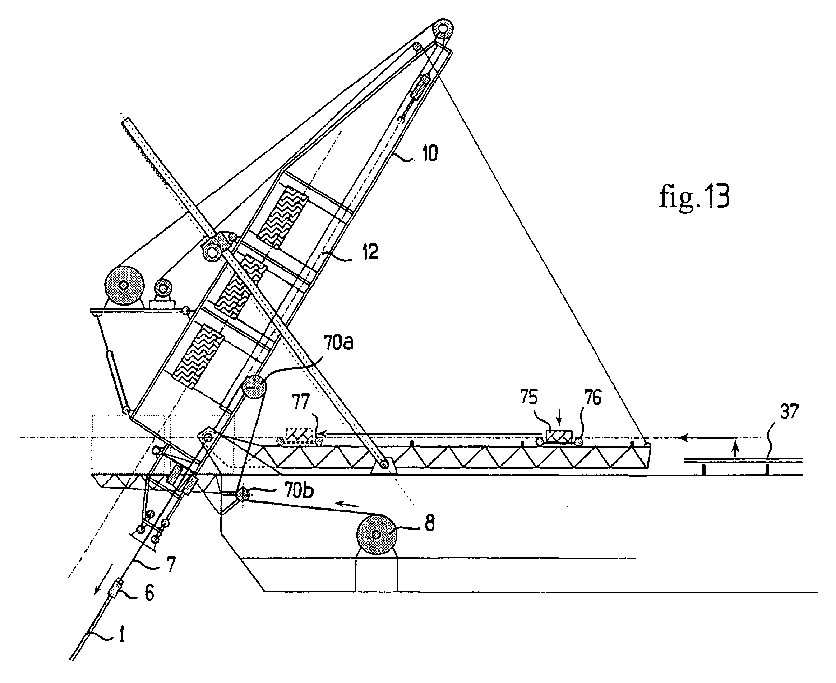

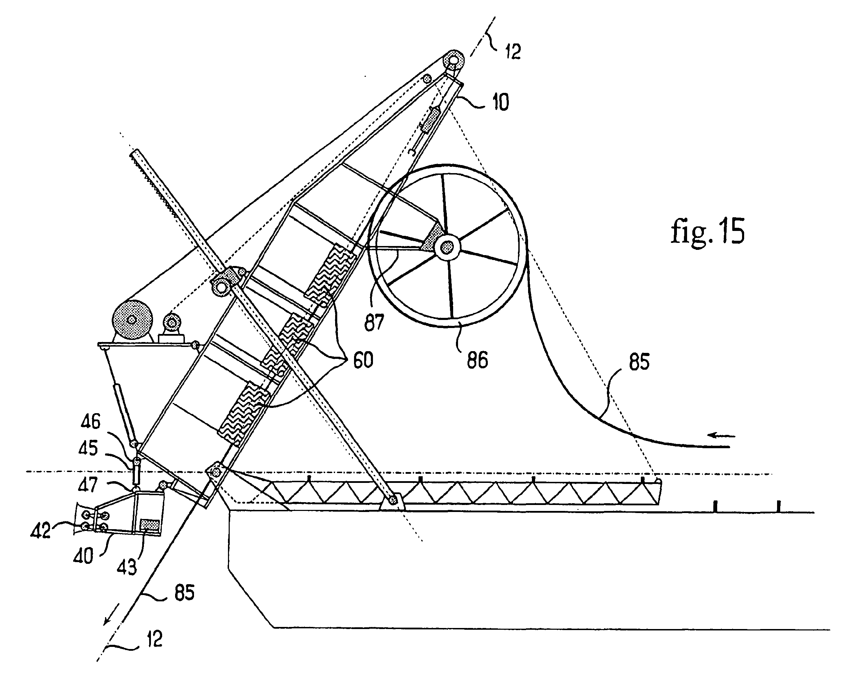

La partie basse 40 de la tour 10 est articulée selon un axe 41 parallèle à l'axe 11 est situé au-dessous de cet axe, ce qui permet de relever cette extrémité pour éviter qu'elle n'interfère avec la mer, lors des trajets effectués à vitesse maximale et à pleine charge. Cette partie basse 40 est représentée ici en position de travail et en position relevée sur la figure 15. La partie basse 40 est équipée d'un dispositif 43 permettant de maintenir en suspension la conduite 1 non représentée, ainsi qu'un dispositif de guidage de rouleaux 42, réglable en fonction du diamètre de la conduite et effaçable pour les phases d'abandon de ligne ou encore pour laisser le passage des équipements lourds et encombrants solidaires de la conduite, tels que décrits dans la figure 13. Cet effacement peut être réalisé au moyen soit d'articulation horizontale, soit d'articulation parallèle à l'axe de pose, soit encore de moyens autorisant des translations.

De la même manière, l'effacement de la partie basse 40 de la tour 100 peut être réalisé au moyen d'articulation d'axe quelconque ou encore de moyens autorisant des translations.

Trois tensionneurs 60 représentés en position de travail sur l'axe secondaire 13, peuvent être déplacés sur la tour, par des moyens non représentés, pour atteindre la position 61 correspondant à une position de travail sur l'axe principal 12.

Une structure porteuse 50, solidaire du navire 2 supporte une cabine de soudage 51a et une cabine de revêtement 51b, mobiles parallèlement à l'axe longitudinal du navire et se déplaçant sur des rails de guidage non représentés.

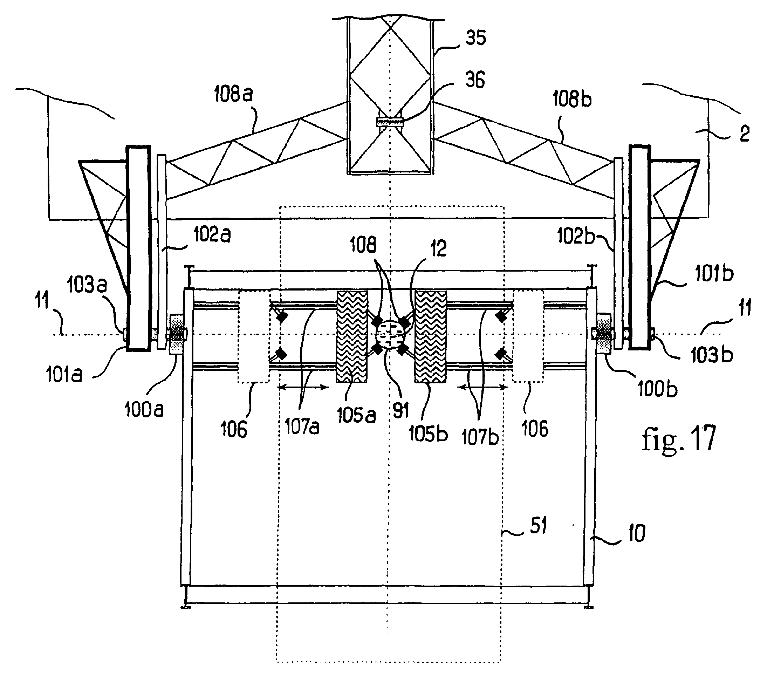

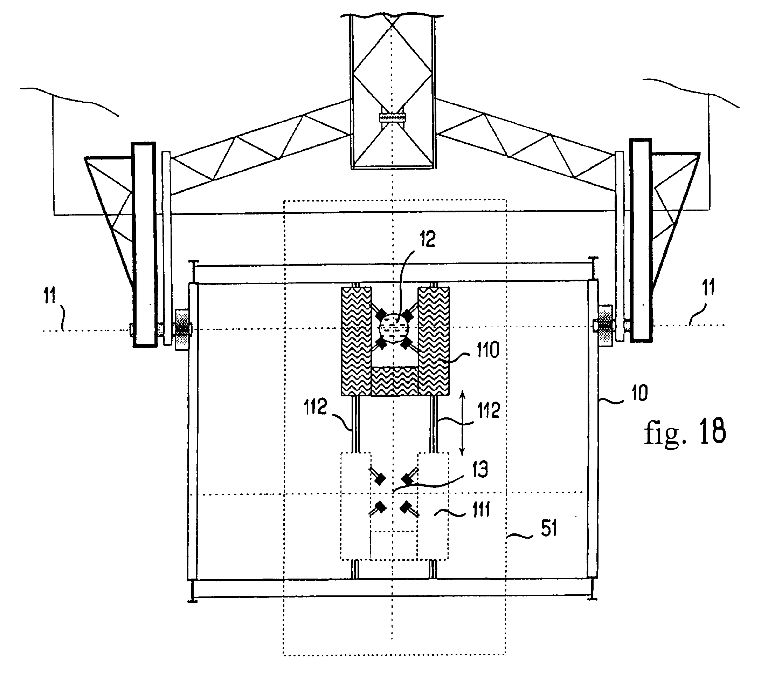

Ces cabines 51 pouvant être déplacées à l'intérieur de la structure de la tour 10 de manière indépendante de l'angle d'inclinaison de la tour, ne doivent pas interférer avec cette dernière. Pour cela, les points d'articulation de la tour 10 et de la poutre 30 se trouvent à l'extérieur et de part et d'autre de la structure principale de ladite tour, comme représenté sur les figures 17 et 18, montrant les paliers 100a et 100b d'axe 11. Sur ces mêmes figures 17 et 18, est représentée en pointillés l'emprise 51 des cabines 51a et 51b.

La figure 4 est une vue de côté, similaire à la figure 3 montrant de plus la conduite immergée dont l'extrémité est maintenue en tension au sein du dispositif 43, guidée au niveau des rouleaux et dont la partie supérieure, correspondant à la zone d'assemblage située dans le plan 44, se trouve à l'intérieur de la cabine de revêtement 51b. Ainsi, après relevage de la poutre 30 portant la rame 35 jusqu'à ce que l'axe de la rame coïncide avec l'axe principal 12 de la tour, l'extrémité supérieure de la rame 35 est saisie par le préhenseur 16 et l'ensemble est redescendu jusqu'à ce que l'extrémité inférieure de la rame vienne en contact avec la conduite en suspension, au niveau du plan 44.

La rame 35 est alors saisie par un système de pinces non représenté, solidaire de la structure de la tour 10, le dispositif de retenue, non représenté, de la rame sur la poutre 30 est alors libéré. La poutre est alors redescendue pour recevoir une nouvelle rame pour le cycle suivant.

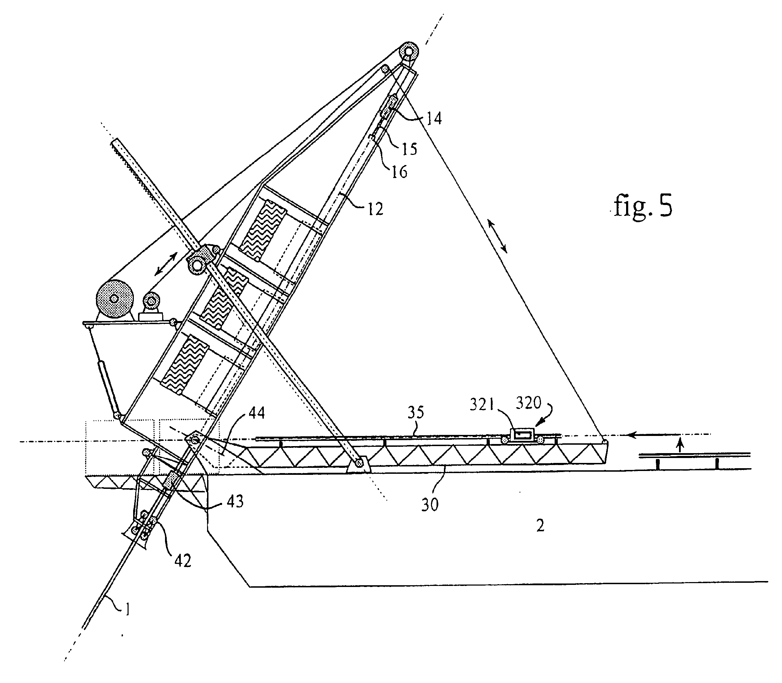

La figure 5 est une vue de côté du navire 2 équipé de la tour de pose 10 et de ses principaux accessoires de pose de conduites rigides comportant, sur la poutre 30, un chariot 320 muni d'un dispositif de guidage, non représenté, parallèle à l'axe de la poutre et possédant un système de pinces 321 servant à retenir la rame lorsque la poutre est en position oblique. Ledit chariot est muni d'un actionneur, tel un vérin hydraulique, non représenté, relié à la structure de la poutre 30, ou encore d'un moto-réducteur, non représenté, solidaire du chariot 320, agissant sur une crémaillère, non représentée, elle-même solidaire de la structure de la poutre et permettant d'effectuer de manière contrôlée, lorsque la poutre 30 est en position relevée, la manoeuvre de descente de la rame pour atteindre la zone d'assemblage située dans le plan 44. En procédant ainsi, on utilise des moyens de traction adaptés au poids de la seule rame, et l'on évite d'utiliser le treuil principal 19 capable de supporter le poids de l'intégralité de la conduite 1 qui peut représenter plusieurs centaines de tonnes. L'actionneur décrit précédemment mettant en jeu des puissances relativement faibles, peut être alors économiquement dimensionné pour atteindre des vitesses de translation largement supérieures, par exemple trois à cinq fois supérieures à celle du treuil principal 19, et ainsi diminuer le temps du cycle de mise en place d'une rame.

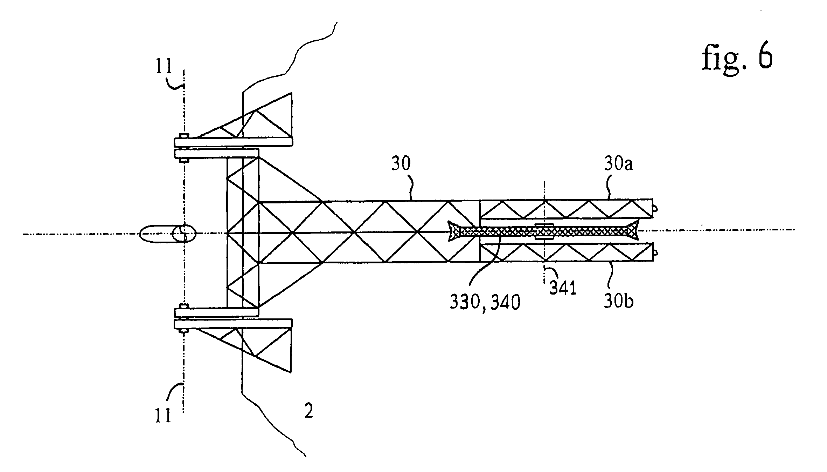

La figure 6 est une vue de dessus de la poutre 30 dont la partie droite est en forme de U et présente deux bras 30a-30b supportant une poulie 340 d'amenée de conduite flexible, d'axe 341, par l'intermédiaire de paliers non représentés. De la même manière, une goulotte 330 peut être installée à la place de la poulie pour effectuer le même service. En procédant ainsi, toutes les charges relatives au poids des équipements et de la conduite flexible sont centrées par rapport à l'axe longitudinal de la poutre et n'induisent pas d'efforts de torsion, comme ce serait le cas si la poulie ou la goulotte étaient installées sur le côté dudit bras. L'extrémité droite de la poutre, représentée en forme de U, peut avantageusement être fermée au moyen de profilés structurels de manière à augmenter la rigidité de celle-ci.

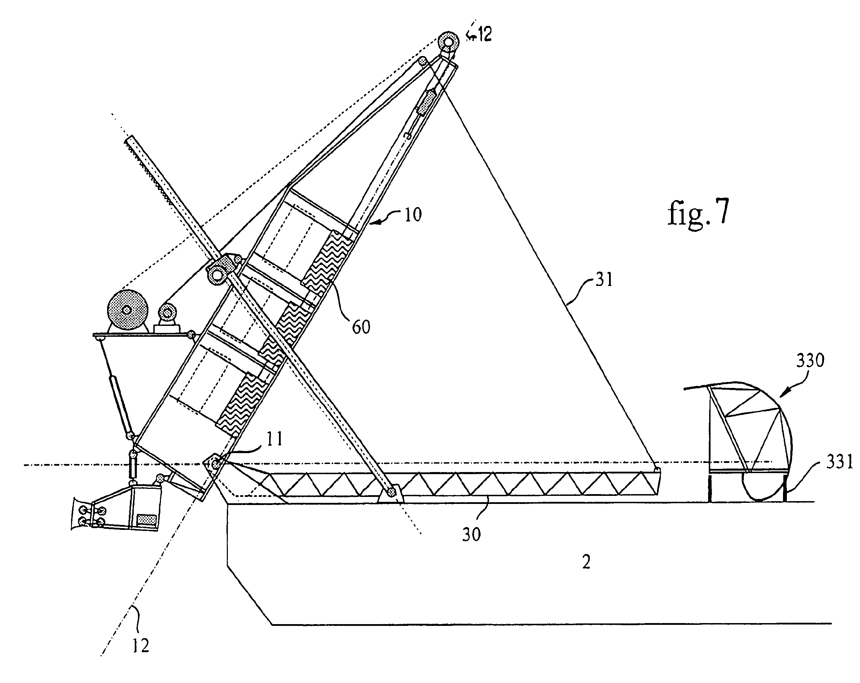

La figure 7 est une vue de côté du navire 2 équipé de la tour 10, montrant une goulotte 330 d'amenée d'une conduite flexible en position de stockage 331 sur le pont du navire.

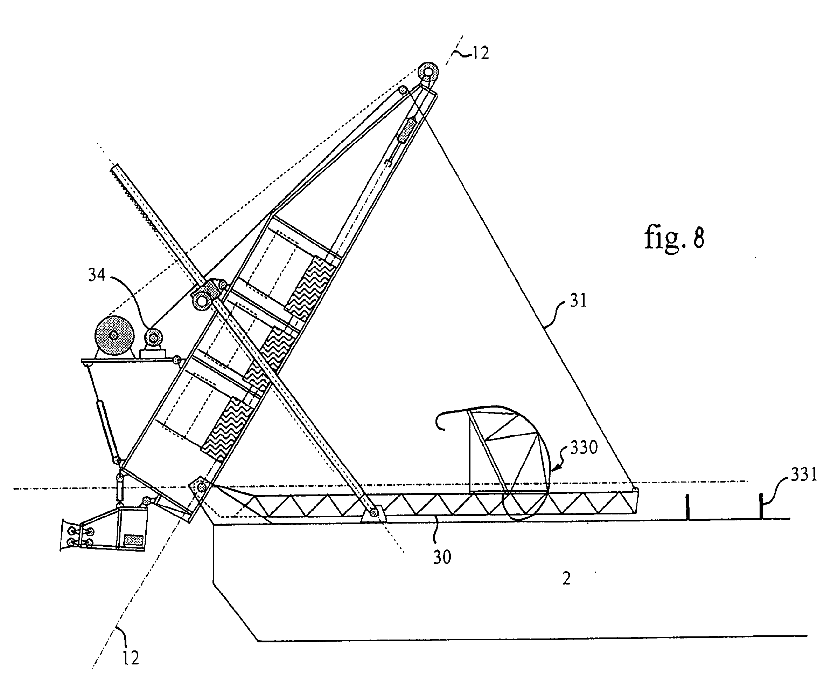

La figure 8 est une vue similaire à la figure 7 montrant la goulotte 330 installée sur la poutre 30. La goulotte 330 est installée sur l'axe longitudinal de la poutre 30, comme représenté sur la figure 6, c'est-à-dire, de manière à ne pas induire d'efforts de torsion sur la conduite.

Avantageusement les moyens d'amenée 330, 340 présentent un rayon de courbure adapté pour que la conduite ne soit pas endommagée lorsqu'elle est guidée vers ou sur le support 3. Ce rayon de courbure est par exemple compris entre 0,5 et 10 mètres, sa valeur dépendant du type de conduites posées.

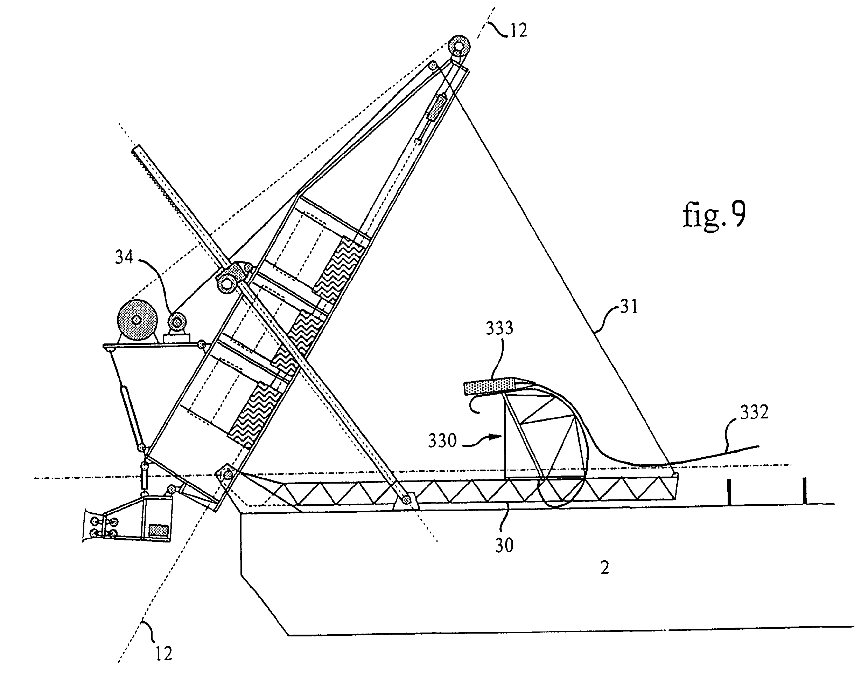

La figure 9 est une vue similaire à la figure 8, montrant une conduite flexible 332 équipée d'un connecteur automatique lourd 333, l'ensemble étant en position sur la goulotte 330, retenu par des moyens non représentés et prêt à être relevé vers la tour pour initier la pose de la conduite.

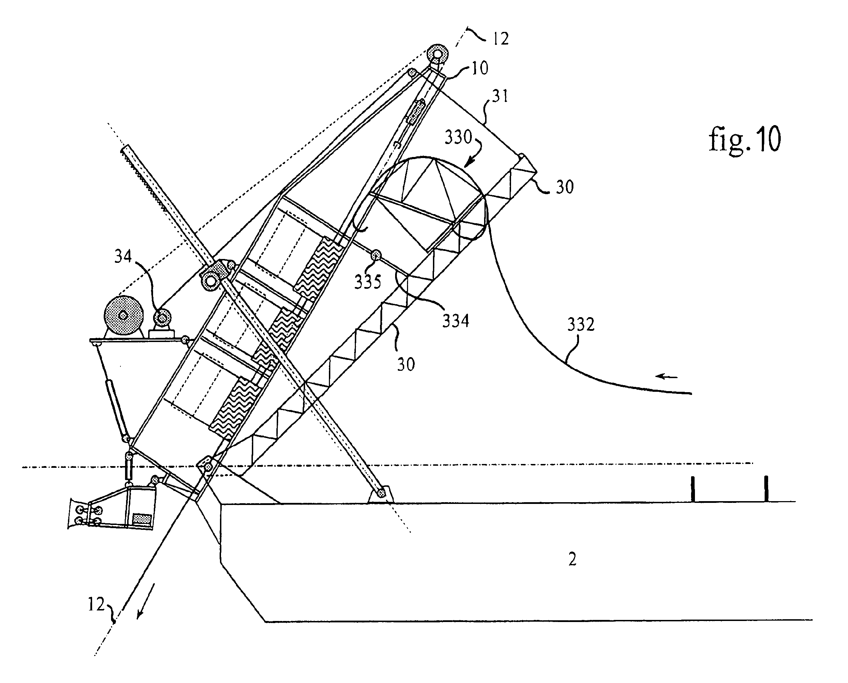

La figure 10 est une vue similaire à la figure 9 montrant la poutre relevée vers la tour 10 et tangente à l'axe principal de pose 12. La conduite flexible, à la sortie de la goulotte 330, passe à travers les tensionneurs 60. En cours de pose, la poutre est maintenue en position par un dispositif constitué d'éléments structurels 334 solidaires respectivement de la structure 10 de la tour et de la poutre 30, l'ensemble étant ajusté puis verrouillé par un dispositif 335. En procédant ainsi, on évite de retenir pendant toute l'opération de pose, la poutre à l'aide du câble 31 relié au treuil 34. On peut alors relâcher la tension dans le câble pendant la dite opération de pose.

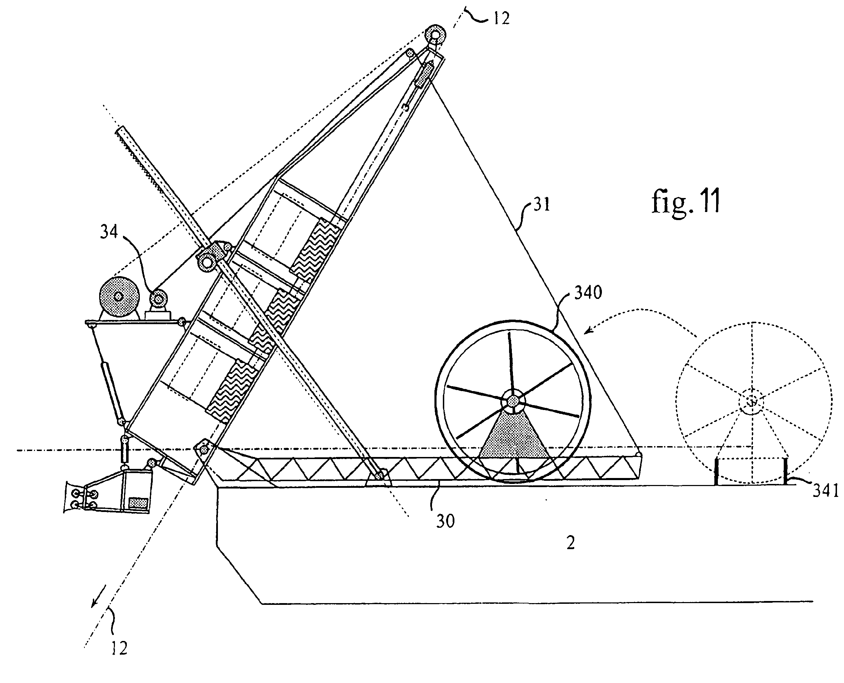

La figure 11 est une vue de côté du navire 2 équipé de la tour 10, montrant une poulie 340 d'amenée d'une conduite flexible installée sur la poutre 30. La poulie 340 est installée sur l'axe longitudinal de la poutre 30 comme représenté sur la figure 6. La poulie 340 peut être motorisée ou non.

La poutre 10 est ensuite basculée en position de pose de manière à ce que la conduite placée sur la poulie 340, soit guidée vers le support 10 en minimisant les contraintes mécaniques appliquées à la conduite.

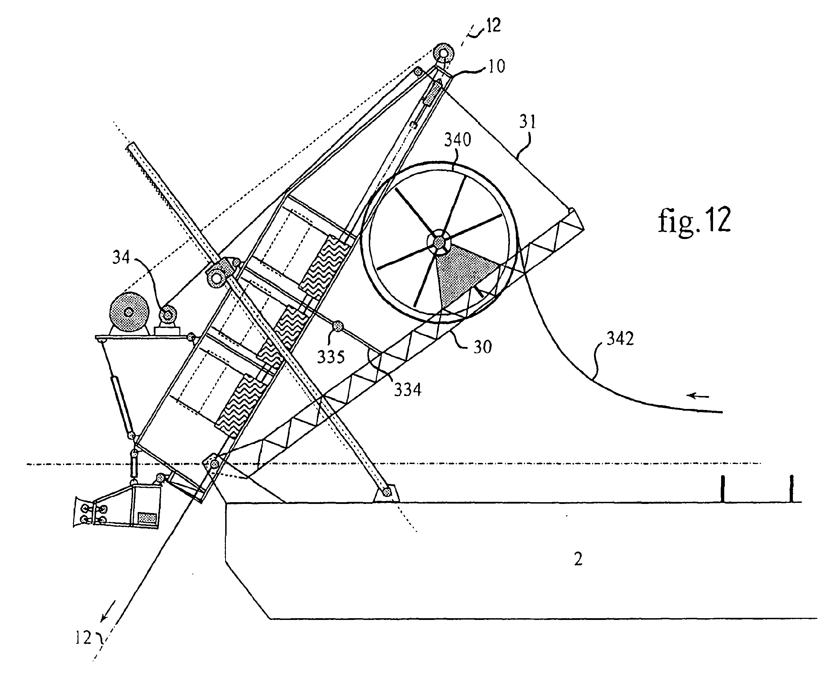

La figure 12 est une vue similaire à la figure 9 montrant, à la place d'une goulotte, une poulie 340, motorisée ou non, d'amenée d'une conduite flexible 342.

La figure 13 est une vue de côté du navire équipé de la tour 10, détaillant une procédure d'abandon ou de libération de la tour en vue d'un retournement du navire de 180 degrés, suivi d'une modification de l'inclinaison de la tour 10, en vue d'effectuer, par exemple l'approche d'une barge en reculant vers celle-ci comme détaillé sur les figures 1 et 2. Pour cette opération, un treuil 8, installé par exemple dans une des cales du navire 2 est connecté par un câble 7 tourné autour de poulies de renvoi 70a-70b ramenant ledit câble dans l'axe principal 12 de la tour 10. L'extrémité du câble est connectée à une tête d'abandon 6 solidaire de la conduite 1.

Sur la figure 13 est représenté un chariot 76 se déplaçant sur des rails non représentés, solidaires de la poutre 30. Ce chariot reçoit des équipements lourds et encombrants pouvant peser plusieurs tonnes et devant être installés sur la conduite lors des opérations de pose. Ainsi, les conduites peuvent être équipées de connecteurs automatiques en début de pose, auquel cas, en tout début d'opération, le connecteur 75 sera déposé sur le chariot 76, par exemple à la grue, puis l'ensemble sera déplacé jusqu'à la position finale 77. La rame 37 qui vient d'être préparée sera alors transférée vers la poutre 30 et son extrémité avant sera assemblée sur ledit connecteur 75. La rame munie de son connecteur sera alors relevée puis transférée vers la tour et la pose commencera alors.

De la même manière, un connecteur de seconde extrémité sera déposé sur le chariot 76 après que la dernière rame ait été mise en place sur la poutre 30. En déplaçant le chariot sur ses rails, on positionne ainsi avec précision le connecteur par rapport à la rame pour effectuer l'assemblage.

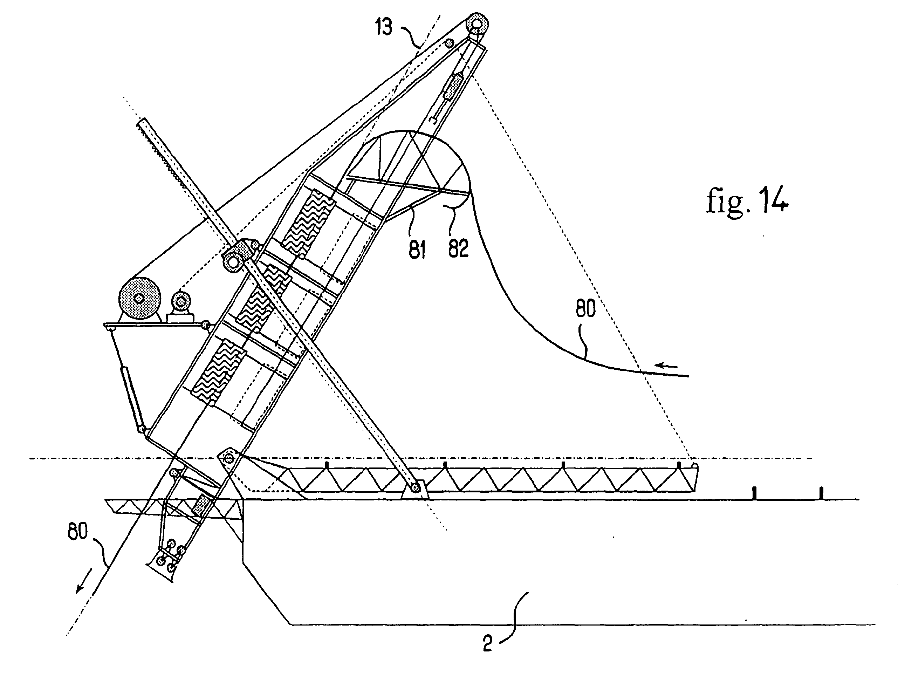

La figure 14 est une vue de côté du navire 2 équipé de la tour et d'une goulotte 82 d'amenée d'une conduite flexible 80. La goulotte présente un rayon de courbure supérieur au rayon de courbure minimal en dessous duquel le flexible serait endommagé et permet de diriger ledit flexible vers l'axe secondaire 13 de la tour 10. Le flexible passe alors successivement dans chacun des tensionneurs avant d'entrer dans l'eau selon un angle correspondant à l'angle de la chaînette de pose.

En effet, lorsque l'on soumet une conduite creuse ou un flexible à une tension alors qu'il est en contact avec une surface courbe, la décomposition des forces met en évidence des efforts perpendiculaires à la surface qui engendreront un écrasement de la conduite. Ainsi, dès lors qu'une conduite se trouve en tension, le rayon minimal de courbure acceptable est fonction du niveau de tension et croit avec celle-ci.

Le dispositif selon l'invention permet ainsi de n'appliquer la tension de pose dans la ligne qu'après que ladite ligne aura été mise en alignement avec l'axe de pose 13, lui-même tangent à la courbe mathématique formée par la chaînette. On constate alors que pendant toute la progression de la ligne, jusqu'à son entrée dans les tensionneurs, cette dernière est soumise à des tensions faibles lors des multiples courbures et contre-courbures engendrées par les divers guidages ainsi que la goulotte. La tension maximale dans la ligne n'est appliquée qu'une fois la ligne engagée dans les tensionneurs, donc lorsque la ligne est sensiblement en ligne droite.

La figure 15 est une vue de côté du navire 2 équipé de la tour 10 et comportant dans sa partie haute un support 87 d'une poulie 86, ledit support étant solidaire de la structure principale de la tour 10. Un câble électrique continu, stocké à bord du navire sur des moyens non représentés, passe autour de la poulie et en sort tangentiellement selon l'axe principal 12 de la tour 10 pour entrer dans les tensionneurs 60 dont l'axe coïncide avec l'axe principal 12. La partie basse 40 de la tour est représentée en position repliée, le mouvement s'effectuant, par exemple, grâce à un vérin 45 articulé d'un côté en 46 sur la structure principale de la tour 10 et de l'autre en 47 sur la partie basse 40. L'installation reste tout à fait possible à travers la partie basse remise en position normale ; dans ce cas, le câble électrique passerait à travers les dispositifs de guidage 42 et de retenue 43, sans qu'il soit nécessaire de les activer. De même, les cabines de soudage et de revêtement, ainsi que leur supportage n'apparaissent plus, bien qu'il soit possible de les laisser en place pour ce type d'opération.

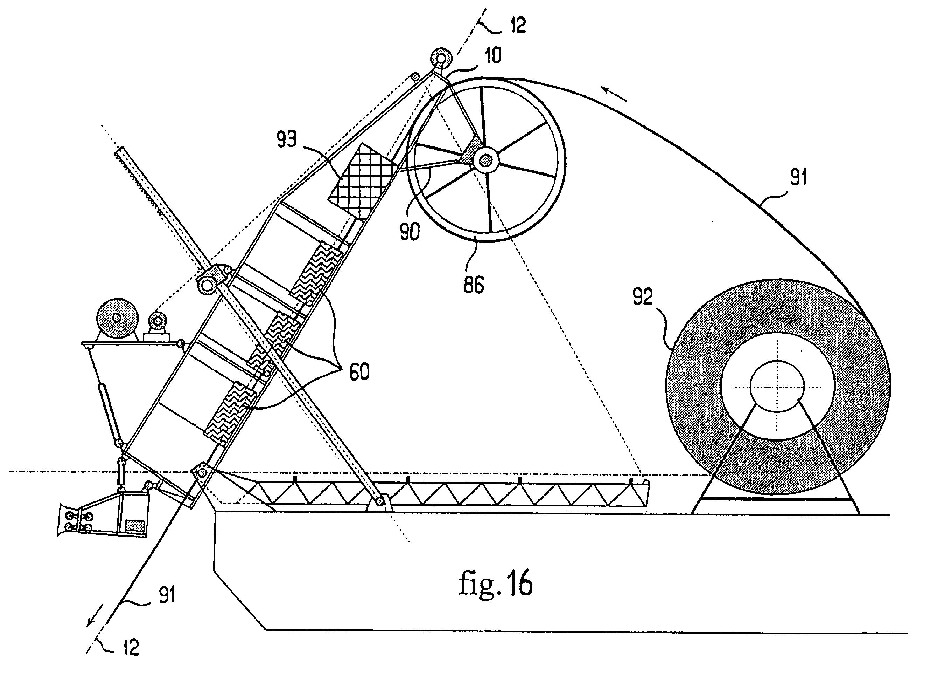

La figure 16 est une vue de côté du navire 2 équipé de la tour 10, et comportant dans sa partie haute un support 90 d'une poulie 86, ledit support étant solidaire de la structure principale de la tour 10. Une conduite 91 continue, en acier de forte épaisseur et présentant une rigidité importante, est stocké à bord du navire sur un tambour 92. Après déroulage, ladite conduite présente en général une courbure concave pendant son parcours vers la gorge de la poulie 86 pour en sortir sensiblement tangentiellement, selon l'axe principal 12 de la tour 10. Elle entre ensuite dans un dispositif redresseur 93, par exemple à galets multiples, qui, étant connu de l'homme du métier du domaine de la fabrication des tubes et des fils de fer, ne sera pas décrit ici dans ses détails. A la sortie du redresseur 93 la conduite 91 entre dans les tensionneurs 60 dont l'axe coïncide avec l'axe principal 12. Comme sur la figure 15, la partie basse 40 de la tour est représentée en position repliée et les cabines de soudage, de revêtement ainsi que leur supportage sont absents, mais pourraient tout aussi bien rester en place sans que le caractère de l'invention ne soit changé.

La figure 17 est une vue de dessus, en coupe transversale de la tour 10 relative à la figure 16. La coupe a été réalisée au niveau du dessus du tensionneur inférieur positionné sur l'axe principal 12 de la tour. Le tensionneur est constitué de deux parties indépendantes 105a-105b pouvant se déplacer sur des rails de guidage 107a-107b solidaires de la structure principale de la tour 10. Les deux parties du tensionneur 105a-105b sont verrouillées en position sur les rails, 107a-107b et les patins 108 maintiennent, par simple friction, la conduite 91 en suspension. Un tel tensionneur à multiples rangées de patins étant connu de l'homme du métier, notamment dans le domaine de la pose en S des conduites sous-marines, ne sera pas décrit ici dans ses détails. Lorsque les tensionneurs ne sont pas utilisés, la place est libérée par déplacement des deux parties 105a-105b vers les positions de garage respectives 106.

L'articulation selon l'axe 11 de la tour 10 et de la poutre 35 est constituée d'un palier 100a-100b solidaire de la structure principale de la tour 10 dans lequel tourillonne un axe 103a-103b solidaire d'une structure 101a-101b, elle-même solidaire du pont du navire 2. Sur ce même axe 103a-103b tourillonne le palier d'extrémité des bras 102a-102b solidaires des structures 108a-108b, elles-mêmes solidaires de la poutre 35.

Ainsi, par ces dispositions, l'axe d'articulation 11 passe bien par le centre de la conduite à poser au niveau du plan d'assemblage. Les paliers et tourillons étant situés à l'extérieur de la structure de la tour 10, n'interfèrent pas avec les équipements et en particulier avec les cabines de soudage ou de revêtement dont l'emprise est représentée par le contour 51.

Pour la clarté de la description, aucun élément situé en dessous du tensionneur inférieur n'est représenté. De la même manière, seuls les éléments principaux de structure sont représentés.

La figure 18 est une vue de dessus, en coupe transversale de la tour 10 relative à la figure 16 similaire à la figure 17, dans laquelle le tensionneur 110 est constitué d'une structure en U pouvant se déplacer sur des rails de guidage 112, solidaires de la structure principale de la tour 10. Lors des opérations de pose le tensionneur 110 est verrouillé en position sur les rails 112 par des moyens non représentés. Le tensionneur, quand il n'est pas utilisé sur l'axe principal 12 de la tour 10, peut être déplacé vers la position de garage 111 correspondant par exemple à l'axe secondaire 13. Le tensionneur peut aussi être utilisé dans cette position 111 pour effectuer la pose d'une conduite selon l'axe 13, alors que l'axe principal 12 est utilisé, par exemple, pour poser simultanément une conduite rigide constituée à partir de rames selon les descriptions des figures 3 et 4.

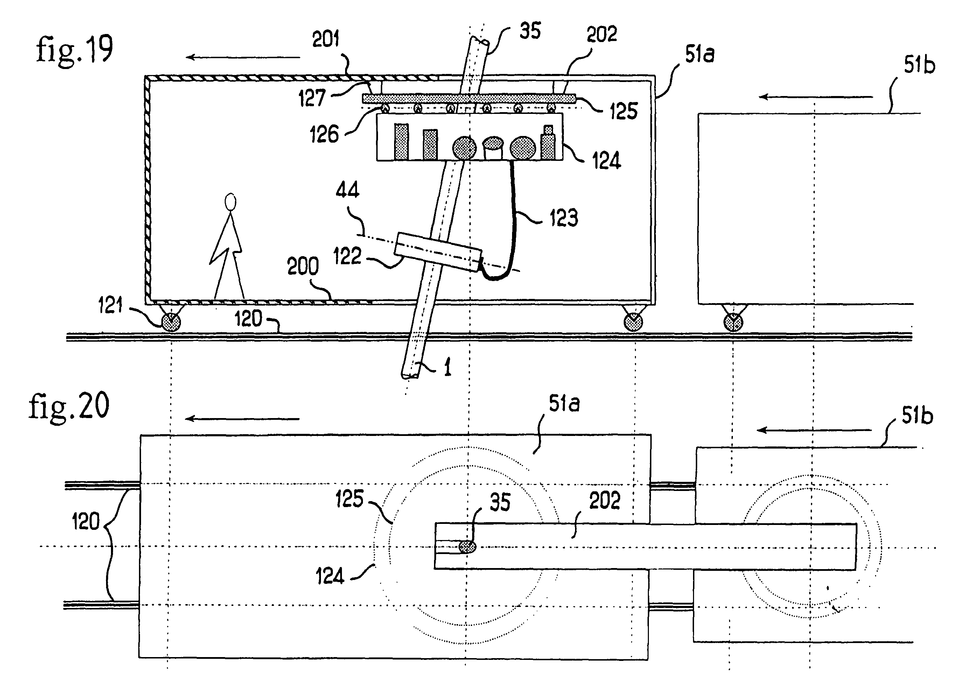

La figure 19 est une coupe en vue de côté de la cabine de soudage 51a et une vue de côté de la cabine de revêtement 51b, se déplaçant sur des rails 120 par l'intermédiaire de roulettes 121.

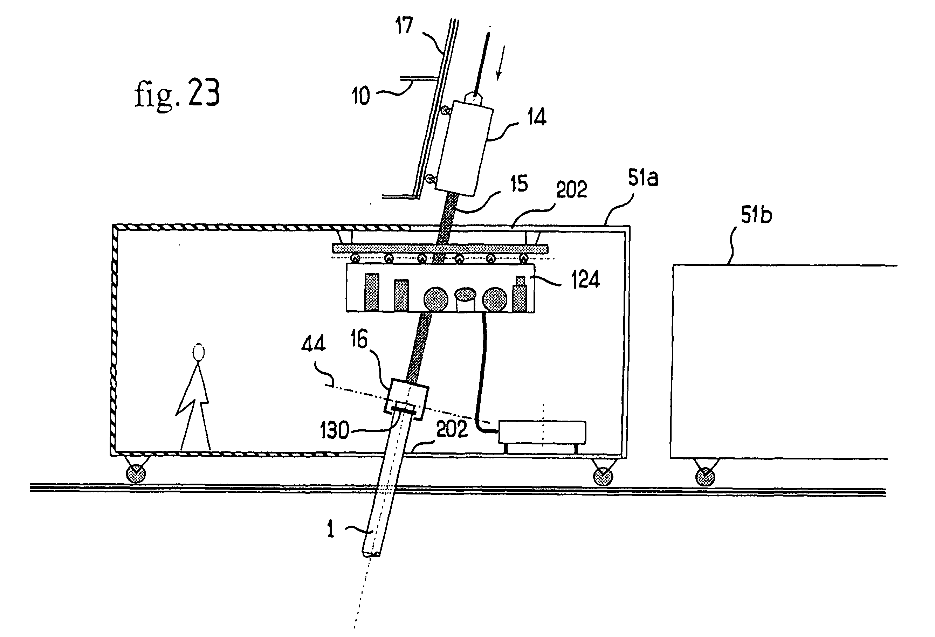

Des ouvertures 202 dans le plafond 201 et dans le plancher 200 de la cabine permettent de laisser passer l'extrémité de la partie de conduite en suspension 1 ainsi que la rame 35 qui vient d'être chargée à l'aide de la poutre 30 et descendu jusqu'au plan d'assemblage 44 par l'ensemble "moufle élévateur-bras-préhenseur" tel que représenté sur les fig. 23 à 26.

Cet ensemble comprend un moufle élévateur 14 monté à translation longitudinale sur la tour, retenu par un câble 18 et pourvu à l'avant de bras rallonges 15 reliés à un préhenseur 16 capable de retenir le poids complet de la conduite en suspension jusqu'au fond de la mer.

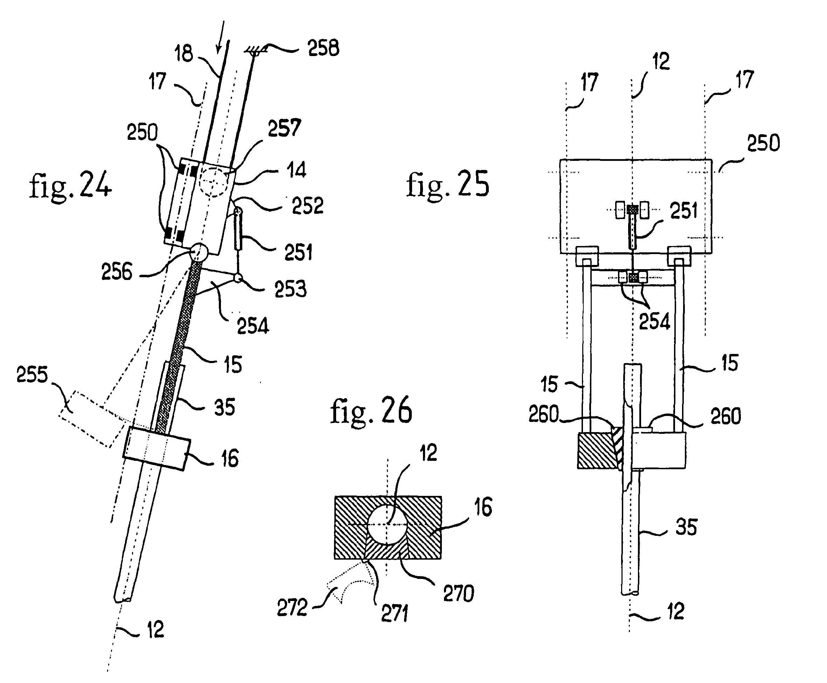

La figure 24 est une vue de côté du moufle élévateur 14 guidé au moyen de patins 250 sur des rails guides 17 non représentés. Le moufle élévateur est retenu par le câble 18 tourné autour d'au moins une poulie 257 et relié à un point fixe 258 solidaire de la structure de la tour 10. Ledit câble est relié au treuil principal 19 représenté en figure 3. Deux bras rallonges 15 sont articulés en 256 en partie basse du moufle élévateur et sont reliés à un préhenseur 16 capable de retenir le poids complet de la conduite en suspension jusqu'au fond de la mer. A cet effet, le préhenseur est équipé d'un dispositif auto-serrant à coins 260, marquants ou non marquants, tel que représenté sur la figure 25.

Ce préhenseur est ouvrant de manière à pouvoir être positionné autour de la conduite. Une fois mis en place, un système de verrou l'empêche de s'ouvrir et les coins sont alors mis en action pour reprendre la charge.

Un tel ensemble est utilisé de manière courante dans les équipements de forage pour manoeuvrer les trains de tiges, l'ensemble des opérations est en général manuel. Le dispositif selon l'invention dispose de plus de moyens pour écarter le préhenseur 16 de l'axe de pose principal 12.

A cet effet, un actionneur 251, de type vérin hydraulique par exemple, est articulé en 252 sur le corps du moufle élévateur 14 d'une part et en 253 sur un gousset 254 solidaire des deux bras articulés 15.

Ainsi, en agissant sur le vérin 251, on écarte le préhenseur 16 de l'axe de pose 12 et l'on évite ainsi toute interférence avec la rame 35 lors de son transfert vers la tour. De la même manière, l'ouverture du préhenseur ainsi que son verrouillage sont munis d'actionneurs non représentés, similaires au vérin 251, pour effectuer les manoeuvres.

La figure 25 est une vue de face de l'ensemble relative à la figure 24 et comportant une vue en coupe de la partie gauche du préhenseur, selon un plan coupant l'axe principal de pose 12, détaillant le coin de serrage.

La figure 26 est une section en vue de dessus du préhenseur 16 comportant une partie avant 270 articulée en 271 et verrouillée par des moyens non représentés.

Pour pouvoir mettre le préhenseur en position de retrait 255, il convient de libérer le verrou, non représenté, de la porte avant 270 puis de faire pivoter la porte autour de l'articulation 271 de manière à l'amener en position 272, ce qui permet ainsi de dégager le préhenseur de la rame 35. Ce mouvement est effectué grâce à un actionneur non représenté. Durant cette manoeuvre, une partie des coins auto-serrants restera solidaire du corps principal du préhenseur 16, les autres restant solidaires de la partie avant 270.

La longueur du bras rallonge 15 est telle que le bras permette au préhenseur d'atteindre l'axe 11 sans que le moufle-élévateur 14 n'ait à pénétrer dans la cabine de soudage 51a. Ainsi, les rails de guidage 17 du chariot 14 s'arrêteront au-dessus du plan sensiblement horizontal matérialisé par le dessus du plafond de la ou des cabines. Après alignement de la rame 35 avec la conduite en suspension 1, l'ensemble est maintenu en position coaxiale par l'intérieur, par un dispositif d'alignement non représenté.

Un collier de soudage 122, constitué d'un système ouvrant est mis en place autour de la conduite au niveau du plan d'assemblage 44 et est relié à un carrousel d'approvisionnement 124 situé en plafond, par l'intermédiaire d'un faisceau de lignes 123 comportant des câbles de puissance électrique, des câbles de contrôle et des câbles d'approvisionnement en consommables, tels que du fil de soudure, des gaz de protection ou tout autre produit nécessaire à l'assemblage des lignes ou à leur protection par revêtement.

Le carrousel 124 portant les génératrices et les consommables est supporté par un système de guidage circulaire, constitué par exemple de roulettes 126 roulant sur une piste circulaire non représentée, solidaire d'une structure 125 elle-même fixée au plafond par une multitude de points d'attache 127. Le dispositif selon l'invention permet ainsi, lorsque le carrousel 122 tourne autour de la conduite 1-35 pour effectuer les opérations de soudage ou de protection, de synchroniser en rotation le carrousel supérieur de manière à ce que le faisceau 123 reste sensiblement vertical pendant tout le cycle de rotation. En procédant ainsi, on minimise la longueur nécessaire des lignes du faisceau et on facilite l'accès des opérateurs aux équipements, tout en réduisant au minimum les risques d'endommagement dudit faisceau ou des équipements embarqués sur les carrousels.

Les carrousels de soudage étant connus de l'homme du métier dans le domaine de l'assemblage des conduites en acier, ne seront pas décrits ici dans leurs détails.

De même, les moyens nécessaires pour synchroniser les deux carrousels étant connus de l'homme du métier dans le domaine des asservissements électriques, ne seront pas décrits ici dans leurs détails.

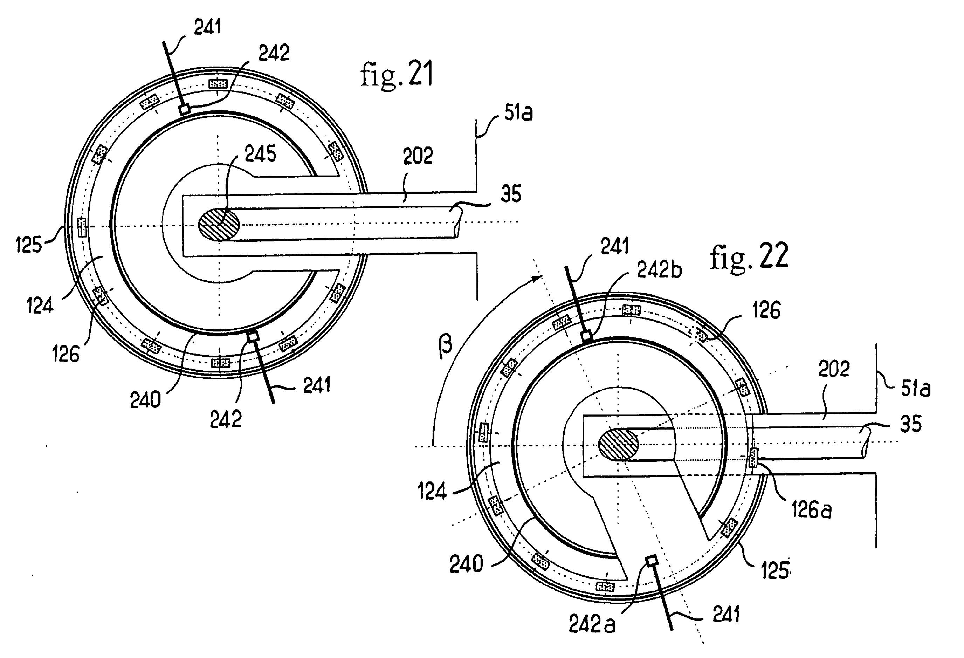

La cabine de soudage 51a peut être déplacée sur la gauche grâce à l'ouverture en U 202 existant au niveau du plafond 201 et du plancher 200. Pour pouvoir échapper la conduite, le carrousel et son supportage sont conçus en forme de fer-à-cheval comme détaillé sur la figure 21.

Une fois la conduite 1-35 libérée de la cabine de soudage 51a, la cabine de revêtement 51b est déplacée vers la gauche pour être mise en place autour de la conduite en suspension.

La cabine de revêtement est équipée de moyens spécifiques installés sur des carrousels similaires à ceux de la cabine de soudage.

Dans une variante de l'invention, les deux cabines 51a et 51b, bien que distinctes, peuvent être solidarisées de manière à ne créer qu'un seul ensemble qui sera alors déplacé vers la droite pour les opérations de soudage et vers la gauche pour les opérations de revêtement. Les cloisons communes entre les deux sous-stations pouvant soit rester en place et créer ainsi un confinement de chacune des opérations, soit être supprimées et ne constituer alors qu'une seule cabine présentant cependant la particularité de pouvoir être désolidarisée en deux sous-stations de travail indépendantes.

La figure 20 est une vue en plan du carrousel en fer-à-cheval situé en plafond de cabine de soudage.

La figure 21 est une vue de dessous relative à la figure 19, détaillant l'ouverture en forme de U du toit de la cabine de soudage 51a.

La cabine se trouve en position extrême vers la droite et la conduite 35 se trouve à proximité du fond du U.

La partie mobile 124 du carrousel est échancrée en forme de fer-à-cheval et reçoit à sa périphérie une série de roulettes, situées sur une génératrice circulaire, et espacées de manière régulière ou non. Lesdites roulettes roulent sur une piste 127, elle aussi circulaire et coaxiale à la génératrice circulaire des roulettes. La piste est solidarisée avec le plafond de la cabine 51a par une pluralité de supports non représentés. La partie mobile 124 du carrousel présente sur sa partie droite une ouverture en forme de U qui permet, lors de la mise en place de la cabine 51a autour de la rame 35, à ladite rame d'atteindre l'axe de rotation du carrousel, sans que la structure de ce dernier n'interfère avec ladite rame 35. De la même manière, la piste de roulement 125 présente une discontinuité correspondant à l'ouverture de la toiture de la cabine 51a.

Le carrousel est alimenté en courant électrique au moyen d'un joint électrique tournant constitué d'une piste circulaire en métal conducteur, par exemple du cuivre, solidaire de la partie tournante 124 du carrousel et installé concentriquement à son axe de rotation 245. Des balais frotteurs 242 sont en contact intime avec la piste circulaire et sont supportés par des moyens, non représentés, solidaires du support de guidage 125. Un conducteur 241 amène le courant électrique aux balais frotteurs. On installe avantageusement au moins deux ensembles de patins frotteurs pour chacune des phases de courant électrique, et de préférence en position diamétralement opposée, de manière à ce que le courant soit transmis sans discontinuité lors du cycle opératoire, pendant la rotation du carrousel. Le dispositif selon l'invention pourra transmettre des courants électriques de puissance ou de contrôle et comportera autant d'ensembles "piste-balais-conducteur" qu'il sera nécessaire. Chacun de ces ensembles sera isolé de ses voisins ainsi que de toute structure métallique environnante.

La figure 22 est la même vue que la figure 21 détaillant la position du carrousel en fer-à-cheval en opération de soudage après qu'il a tourné d'un angle β. Durant la rotation complète, les roulettes se déplaceront sur la piste circulaire 125, sauf dans la portion 202, correspondant à l'ouverture en toiture, où chacune des roulettes se trouvera successivement en l'air comme représenté sur la roulette 126a.

De la même manière, lors de la rotation, les balais frotteurs 242 se trouveront successivement en l'air, mais du fait qu'ils sont multiples pour une même phase, la transmission du courant électrique ne sera pas interrompue. Le balai frotteur 242a est ici représenté en l'air alors que le balai frotteur 242b est toujours en contact.

Lorsque le cycle complet de soudage est terminé, l'ouverture du carrousel en fer-à-cheval se retrouve en coïncidence avec l'ouverture en toiture 128 et la cabine peut être déplacée vers la gauche, sans que l'ensemble n'interfère avec la rame 35.

La figure 23 est une vue de côté de la cabine de soudage 51a montrant l'opération de descente de la conduite en suspension après la fin du cycle d'assemblage de la rame. L'extrémité supérieure de la conduite 1 est maintenue, au niveau d'une collerette 130 solidaire de ladite conduite au moyen du préhenseur 16 connecté aux bras rallonges 15 solidaire du moufle-élévateur 14 se déplaçant sur le rail de guidage 17 de la structure principale de la tour 10. La longueur des bras rallonges est ajustée pour que l'élévateur puisse positionner l'extrémité supérieure de la conduite 1 au niveau du plan d'assemblage 44, alors que le moufle reste au-dessus de la cabine 51a représentée comme étant la plus haute des deux. En procédant ainsi, les rails de guidage 17 peuvent s'arrêter au-dessus de la cabine, ce qui permet de minimiser la largeur de l'ouverture en toiture de la cabine.

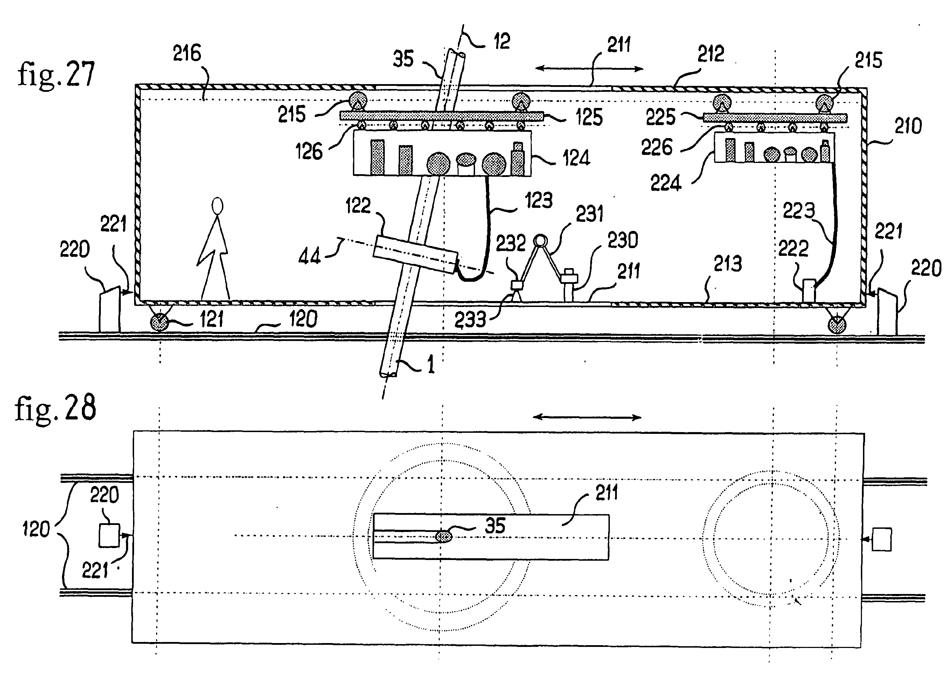

Dans une variante de réalisation (figs. 27 et 28) la station de travail regroupe en une seule cabine tous les équipements nécessaires aux opérations.

La cabine est fixe lors des opérations, mais sa position longitudinale peut avantageusement être ajustée de manière fine en fonction de l'inclinaison de la tour grâce à un système de guidage constitué de rails 120, associé à des roulettes 121 solidaires de la cabine 210. En position de travail, la cabine est verrouillée en déplacement grâce à un système de butées 220 et de verrous 221.

La cabine présente en plafond 212 et au niveau du plancher 213 une ouverture 211 dimensionnée en fonction des caractéristiques des conduites et des dimensions des accessoires lourds et encombrants qui devront, lors des opérations d'installation, passer au travers de la cabine 210. Un carrousel de soudage 122-126, déjà décrit dans ses détails, est installé en plafond de cabine, mobile longitudinalement sur des rails 216 non représentés, au moyen de roulettes 215.

Ce carrousel en fer-à-cheval, présentant une ouverture vers la droite, peut être dégagé vers la gauche de la cabine 210 pour laisser la place à un carrousel similaire 222-226 portant les équipements et consommables nécessaires à la protection des joints. Ce dernier carrousel présente une ouverture dirigée vers la gauche et peut ainsi, par simple translation sur les rails 216 au moyen des roulettes 215, être transféré de sa position de garage à sa position de travail. Au sein de la même cabine, sont installés à poste fixe les moyens de contrôle des opérations de soudage et éventuellement de revêtement.

A cet effet, les moyens de contrôle 232 sont solidaires d'un bras articulé 231 lui-même solidaire d'un support 230 reposant par exemple sur le plancher 213 de la cabine 210. L'ensemble est représenté en position de repli, les moyens de contrôle reposant sur un support 233.

La figure 28 est la vue de dessus relative à la figure 27, montrant l'ouverture 211 en plafond de cabine.

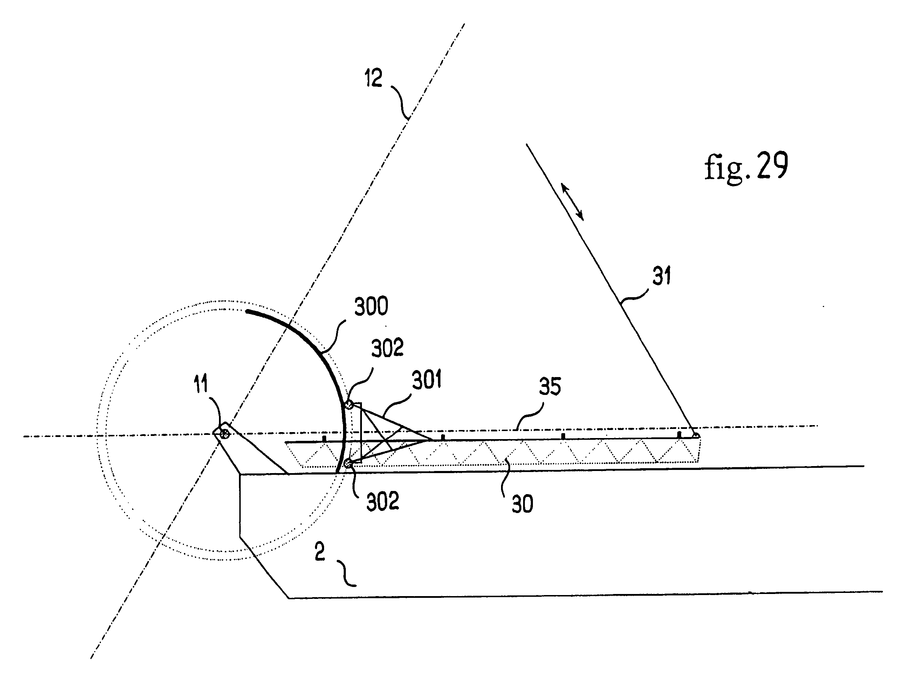

La figure 29 est une épure en vue de côté montrant un mode de réalisation d'un axe de rotation virtuel 11 permettant de relever la poutre 30 vers la tour 10 non représentée, de telle manière que l'axe 35 de la rame non représentée coupe l'axe 11 d'inclinaison de la tour, et ce quelle que soit l'inclinaison de ladite rampe. A cet effet, une structure de guidage circulaire 300 est solidaire du navire 2 et le plan du cercle est perpendiculaire à l'axe 11 et son centre est situé sur ledit axe 11. Seule la piste circulaire a été représentée, les structures principales et secondaires ne sont pas représentées. Une structure 301 est solidaire de la poutre 30 et porte à son extrémité des moyens 302, constitués ici de roulettes, qui, collaboreront avec la piste circulaire de telle manière que, quelle que soit l'inclinaison de la rampe, l'axe 35 coupe l'axe 11.

Un résultat sensiblement similaire peut être obtenu au moyen d'une combinaison de bras articulés organisés en trapèzes déformables.

Lors du cycle d'assemblage d'une rame, après avoir relevé la poutre et accroché l'élévateur à la rame, cette dernière est descendue pour venir en appui sur l'extrémité supérieure de la portion de conduite déjà assemblée. Dans cette phase, la cabine de soudage se trouve en position, alors que la cabine de revêtement est en position de repli. En fin de soudage, la cabine de soudage est déplacée vers sa position de repli et la cabine de revêtement est mise en position de travail pour effectuer les opérations de protection et les éventuels contrôles non destructifs relatifs à la qualité du soudage. En fin de cycle, le chariot reprend la tension de l'ensemble de la conduite assemblée, les moyens de blocage situés dans la partie inférieure de la tour sont libérés et l'ensemble est descendu jusqu'à ce que l'élévateur situé à l'extrémité du bras du chariot atteigne la zone du plan d'assemblage. Dans cette position, les moyens de blocage sont réactivés de manière à reprendre la tension de la conduite, l'élévateur est libéré et le chariot est remonté jusqu'au sommet de la tour en attente de la prochaine rame.

Durant cette phase de descente de la conduite complète, la cabine de revêtement est déplacée vers sa position de repli et la cabine de soudage est mise en position de travail, prête pour le cycle suivant.

Ainsi, l'invention permet de réaliser un dispositif universel qui permet la pose de conduites rigides ou non rigides, constituée de tronçons rectilignes ou déroulés, selon un axe de pose qui peut être choisi à volonté, qui convient par conséquent à tout type de conduite et à toute profondeur de pose, ainsi que la pose simultanée de deux conduites.

L'invention n'est pas limitée à ces exemples de réalisation.

En particulier, le dispositif selon l'invention peut être utilisé pour la pose de tronçons de quelques mètres à plusieurs dizaines de mètres comme pour la pose de conduites de grande longueur continue de quelques dizaines de mètres à plusieurs kilomètres, enroulées sur des tambours. Ces conduites de grande longueur continue présentent des extrémités susceptibles d'être raccordées grâce au dispositif selon l'invention. Le dispositif selon l'invention est donc destiné aussi bien à la pose de conduites rigides que de conduites souples, sous forme de tronçons ou de grandes longueurs continues. Les caractéristiques spécifiques à la pose de conduites souples, ainsi que celles spécifiques à la pose de tronçons ou de grandes longueurs continues, peuvent se trouver présentes sur le dispositif selon l'invention indépendamment les unes des autres.

## Revendications

1. Dispositif pour le raccordement et la pose des parties successives d'une conduite sous-marine depuis un navire (2), qui comprend sur le navire, (A) un support de conduite (3) à inclinaison variable équipé de moyens (43) pour supporter le poids de la partie de conduite déjà immergée et maintenir à la demande dans un plan d'assemblage (44) l'extrémité émergée de cette partie de conduite, de moyens (14-16) pour recevoir une nouvelle partie de conduite selon l'axe longitudinal de pose (12) de la conduite et l'amener dans ledit plan d'assemblage et de moyens de guidage, (B) des moyens (100a, 100b ; 101a, 101b) constituant un axe horizontal (11) de pivotement du support sur le navire en sorte que le support soit inclinable dans la position qui convient pour la pose en mer de la nouvelle partie de conduite, (C) des moyens (22-26) pour commander le pivotement du support et pour le maintenir dans l'inclinaison requise, (D) des moyens (20, 31-34) pour déposer sur le support la nouvelle partie de conduite, et (E) une station de travail (51a, 52b) équipée de moyens pour réaliser l'assemblage, **caractérisé en ce que** cette station est portée par le navire indépendamment du support et **en ce que** ledit axe de pivotement (11) coupe ledit axe longitudinal de pose (12) sensiblement dans ledit plan d'assemblage (44).

2. Dispositif selon la revendication 1, lequel dispositif comporte sur le support (10) des moyens (82, 86, 330, 340) présentant une courbure pour guider sur le support (10), une conduite continue provenant d'un tambour (92).

3. Dispositif selon la revendication 1, lequel dispositif, comporte une poutre (30) et des moyens (31, 34) pour ajuster et maintenir la poutre (30) en position, lorsqu'elle est en position inclinée, la poutre étant en outre équipée de moyens (330, 340) présentant une courbure pour guider vers le support (10), une conduite continue provenant d'un tambour (92), lorsque la poutre (30) est dans cette position.

4. Dispositif selon l'une des revendications 2 et 3, dans lequel les moyens (330, 340) présentant une courbure comporte une goulotte (330).

5. Dispositif selon l'une des revendications 2 et 3, dans lequel les moyens (330, 340) présentant une courbure comporte une poulie (340).

6. Dispositif selon l'une des revendications 2 à 5, dans lequel la poutre(30) présente une extrémité supérieure en forme de U.

7. Dispositif selon l'une des revendications 2 à 6, dans lequel les moyens (334, 335) pour maintenir la poutre (30) en position comportent des moyens de verrouillage de la poutre (30) au support (10) qui comprennent une liaison structurelle (334), associée à un verrou (335).

8. Dispositif selon l'une des revendication 1 et 2, lequel dispositif comporte une poutre (30) apte à supporter un tronçon rigide et montée sur le navire de façon à pouvoir pivoter autour d'un axe sensiblement horizontal de pivotement de la poutre, de préférence l'axe de pivotement de la poutre coïncidant avec l'axe de pivotement du support (11), des moyens (20, 31-34) étant prévus pour commander le basculement de la poutre entre une position de départ sensiblement horizontale qui permet de poser ou de constituer ce tronçon sur la poutre à partir d'un stock et une position inclinée de transfert où le tronçon peut être transféré au support (3), lequel aura été préalablement amené dans sa position inclinée de service.

9. Dispositif selon l'une des revendications 1 à 7, dans lequel la station de travail (51a) est déplaçable sur le navire.

10. Dispositif selon la revendication 9, dans lequel le support de conduite (3) est une tour conformée pour permettre le déplacement de la station de travail (51a) dans ou au travers de la tour.

11. Dispositif selon la revendication 9 ou 10, dans lequel la station de travail (51a) est déplaçable parallèlement à l'axe longitudinal du navire.

12. Dispositif selon l'une des revendications 1 à 11, dans lequel la station de travail (51a) comporte un plancher (200) pour le déplacement du personnel et un plafond (201) ou une structure en plafond qui porte les moyens d'alimentation requis pour alimenter des têtes de soudage disposées au voisinage du plan d'assemblage.

13. Dispositif selon la revendication 12, dans lequel la station de travail comporte un carrousel (124) qui porte lesdits moyens d'alimentation.

14. Dispositif selon la revendication 13, dans lequel le carrousel (124) présente une échancrure pour le passage de la nouvelle partie de conduite.

15. Dispositif selon l'une des revendications 13 et 14, dans lequel le carrousel (124) est déplaçable à translation entre une position de service et une position d'escamotage.

16. Dispositif selon l'une des revendications 13 à 15, dans lequel le carrousel est alimenté en courant électrique au moyen d'un joint électrique tournant constitué d'une piste circulaire en métal conducteur solidaire de la partie tournante (124) du carrousel et de deux ensembles de balais frotteurs (242) solidaires du support de guidage (125).

17. Dispositif selon l'une des revendications 1 à 16, dans lequel la station de travail comprend des premiers moyens pour réaliser ledit assemblage et des deuxièmes moyens pour réaliser des travaux annexes, ces moyens étant substituables l'un à l'autre.

18. Dispositif selon la revendication 17, dans lequel la station de travail comprend deux cabines substituables l'une par l'autre, et contenant respectivement les premiers et les deuxièmes moyens.

19. Dispositif selon la revendication 17, dans lequel les premiers et deuxièmes moyens sont intégrés dans une même cabine.

20. Dispositif selon l'une des revendications 17 à 19, dans lequel les premiers et les deuxièmes moyens comportent des carrousels respectifs.

21. Dispositif selon l'une des revendications 1 à 20, dans lequel le support (10) comporte une partie basse (90) située au-dessous dudit axe de pivotement (11) et articulée au reste du support autour d'un axe (41) parallèle audit axe de pivotement et cette partie basse est équipée des moyens (43) qui permettent de maintenir la partie de la conduite (1) qui est déjà immergée.

22. Dispositif selon l'une des revendications 1 à 21, qui comprend un moufle élévateur (14) déplaçable sur ledit support (10) selon ledit axe de pose longitudinal (12) et actionné par un treuil (19) par l'intermédiaire d'un câble de mouflage et qui comporte sur son avant un bras rallonge articulé (15) équipé d'un préhenseur (16) ouvrable, dont l'ouverture est commandée par un actionneur, pour saisir l'extrémité supérieure de la nouvelle partie de conduite, le bras rallonge possédant une longueur suffisante pour atteindre le plan d'assemblage (44) situé à l'intérieur de la station de travail (51), ledit bras étant mis en mouvement au moyen d'un actionneur.

23. Dispositif selon l'une des revendications 1 à 22, dans lequel le support est équipé de tensionneurs (60) aptes à serrer latéralement une conduite au-dessus dudit axe de pivotement et qui sont déplaçables de l'une à l'autre de deux positions qui correspondent respectivement au serrage d'une conduite selon un axe principal de pose principale (12) et au serrage d'une conduite selon un axe de pose secondaire (13), parallèle à l'axe principal et plus éloigné que lui de l'axe de pivotement du support (11).

24. Dispositif selon la revendication 23, dans lequel le support comporte un redresseur de conduite (93) en amont des tensionneurs pour remettre à la configuration rectiligne une partie de conduite provenant d'un déroulage.

25. Dispositif selon l'une des revendications 1 à 24, qui comporte une poutre apte à supporter la nouvelle partie de conduite, cette poutre étant montée sur le navire (2) de façon à pouvoir pivoter autour dudit axe de pivotement (11), et étant munie de moyens de déplacement (320) aptes à maintenir la nouvelle partie de conduite sur la poutre (30) et à être déplacés le long de celle-ci, pour amener la nouvelle partie de conduite en position d'assemblage, dans le plan d'assemblage (44).

26. Dispositif selon l'une des revendications 1 à 24, qui comporte une poutre (30) apte à supporter une conduite, cette poutre étant montée sur le navire (2) de façon à pouvoir pivoter autour d'un axe sensiblement horizontal de pivotement de la poutre, de préférence l'axe de pivotement de la poutre coïncidant avec l'axe de pivotement du support (11) et comportant des moyens (330, 340) d'amenée et de guidage d'une conduite continue, ces moyens d'amenée (330,340) présentant une courbure telle que la conduite peut être guidée sur le support de conduite sans être endommagée.

27. Dispositif selon la revendication 26, **caractérisé en ce que** les moyens d'amenée comprennent une goulotte (330).

28. Dispositif selon la revendication 26, **caractérisé en ce que** les moyens d'amenée comprennent une poulie (340).

29. Dispositif selon l'une des revendications 26 à 28, **caractérisé en ce que** poutre (30) présente une extrémité supérieure en forme de U.

30. Dispositif selon l'une des revendications 26 à 29, **caractérisé en ce qu'**il comporte des moyens de verrouillage de la poutre (30) au support, comprenant une liaison structurelle (334), associée à un verrou (335).

31. Application d'un dispositif selon l'une des revendications 1 à 25, à la pose d'une conduite constituée de tronçons rigides.

32. Application d'un dispositif selon l'une des revendications 26 à 30 à la pose d'une conduite constituée de tronçons non rigides enroulés sur un distributeur et déroulés à la demande sur le support.

33. Application d'un dispositif selon l'une des revendications 2 et 26 à 30 à la pose simultanée d'une conduite constituée de tronçons rigides et d'une autre conduite déroulée à la demande, notamment d'une ligne flexible de grande longueur continue.

## Patentansprüche

1. Vorrichtung für die Verbindung und die Verlegung der aufeinanderfolgenden Teilen einer Unterwasserleitung von einem Schiff (2) aus, welche auf dem Schiff folgendes umfasst: (A) einen Leitungsträger (3) mit variabler Neigung, der ausgestattet ist mit Mitteln (43), um das Gewicht des bereits eingetauchten Leitungsteil zu tragen, und um bei Bedarf das nicht eingetauchte Endstück dieses Leitungsteils in einer Montageebene (44) zu halten, mit Mitteln (14-16), um einen neuen Teil der Leitung entlang der Längsachse der Verlegung (12) der Leitung aufzunehmen und sie in der Montageebene zu führen und mit Führungsmitteln, (B) Mittel (100a, 100b; 101a, 101b), die eine horizontale Schwenkachse des Trägers auf dem Schiff bilden, damit der Träger in die Stellung neigbar ist, die sich zur Verlegung des neuen Leitungsteils im Meer eignet, (C) Mittel (22-26), um das Schwenken des Trägers zu steuern und um ihn in der erforderlichen Neigung zu halten, (D) Mittel (20, 31-34), um auf dem Träger den neuen Teil der Leitung abzusetzen, und (E) eine Arbeitsstation (51a, 52b), die mit Mitteln ausgestattet ist, um die Montage durchzuführen, **dadurch gekennzeichnet, dass** diese Station unabhängig vom Träger vom Schiff getragen wird und dass die Schwenkachse (11) die Längsachse der Verlegung (12) im wesentlichen in der Montageebene (44) schneidet.

2. Vorrichtung nach Anspruch 1, welche auf dem Träger (10) Mittel (82, 86, 330, 340) umfasst, die eine Krümmung aufweisen, um auf dem Träger (10) eine fortlaufende, von einer Trommel (92) kommende Leitung zu führen.

3. Vorrichtung nach Anspruch 1, welche einen Balken (30) und Mittel (31,34) umfasst, um den Balken (30) auf eine Stellung einzustellen und zu halten, wenn er in geneigter Stellung ist, wobei der Balken außerdem mit Mitteln (330, 340) ausgestattet ist, die eine Krümmung aufweisen, um in Richtung des Trägers (10) eine fortlaufende, von einer Trommel (92) kommende Leitung zu führen, wenn der Balken (30) in dieser Stellung ist.

4. Vorrichtung nach einem der Ansprüche 2 und 3, bei welcher die Mittel (330, 340), die eine Krümmung aufweisen, eine Rinne (330) umfassen.

5. Vorrichtung nach einem der Ansprüche 2 und 3, bei welcher die Mittel (330, 340), die eine Krümmung aufweisen, eine Rolle (340) umfassen.

6. Vorrichtung nach einem der Ansprüche 2 bis 5, bei welcher der Balken (30) ein oberes Endstück in U-Form aufweist.

7. Vorrichtung nach einem der Ansprüche 2 bis 6, bei welcher die Mittel (334, 335) um den Balken in Stellung zu halten Sperrmittel vom Balken (30) zum Träger (10) umfassen, die eine strukturelle Verbindung (334) umfassen, die mit einer Sperre (335) verbunden ist.

8. Vorrichtung nach einem der Ansprüche 1 und 2, welche einen Balken (30) umfasst, der geeignet ist, ein starres Teilstück zu tragen, und der derart auf das Schiff montiert ist, um um eine im wesentlichen horizontale Schwenkachse des Balken schwenken zu können, wobei vorzugsweise die Schwenkachse des Balkens mit der Schwenkachse des Trägers (11) zusammenfällt, wobei Mittel (20, 31-34) vorgesehen sind, um das Umschwenken des Balkens zu steuern zwischen einer im wesentlichen horizontalen Ausgangsstellung, welche erlaubt dieses Teilstück auf den Balken zu legen oder von einem Lager ab aufzubauen, und einer geneigten Transportposition, wo das Teilstück zum Träger (3) transportiert werden kann, der vorab in seine geneigte Betriebsstellung geführt wurde.

9. Vorrichtung nach einem der Ansprüche 1 bis 7, bei welcher die Arbeitsstation (51a) auf dem Schiff verstellbar ist.

10. Vorrichtung nach Anspruch 9, bei welcher der Leitungsträger (3) ein entsprechender Turm ist, um das Verstellen der Arbeitsstation (51a) in oder mittendurch den Turm zu erlauben.

11. Vorrichtung nach Anspruch 9 oder 10, bei welcher die Arbeitsstation (51a) parallel zur Längsachse des Schiffes verstellbar ist.

12. Vorrichtung nach einem der Ansprüche 1 bis 11, bei welcher die Arbeitsstation (51a) einen Fußboden (200) umfasst für die Bewegung des Personals und eine Decke (201) oder eine Deckenstruktur, die die erforderlichen Versorgungsmittel trägt, um die in der Nachbarschaft der Montageebene angeordneten Schweißköpfe zu versorgen.

13. Vorrichtung nach Anspruch 12, bei welcher die Arbeitsstation einen Kreisförderer (124) umfasst, der die Versorgungsmittel trägt.

14. Vorrichtung nach Anspruch 13, bei welcher der Kreisförderer (124) einen Ausschnitt für den Durchtritt des neuen Leitungsteils aufweist.

15. Vorrichtung nach einem der Ansprüche 13 und 14, bei welcher der Kreisförderer (124) zwischen einer Betriebsstellung und einer Einzugsstellung verschiebbar ist.

16. Vorrichtung nach einem der Ansprüche 13 bis 15, bei welcher der Kreisförderer mit elektrischem Strom mittels einer elektrischen Drehverbindung versorgt wird, die durch eine kreisförmige Bahn aus Leitermetall, die mit dem Drehteil (124) des Kreisförderers fest verbunden ist, und zwei Einheiten von Kontaktbürsten (242), die mit dem Führungsträger (125) fest verbunden sind, gebildet wird.

17. Vorrichtung nach einem der Ansprüche 1 bis 16, bei welcher die Arbeitsstation erste Mittel umfasst, um die Montage durchzuführen, und zweite Mittel, um zugehörige Arbeiten durchzuführen, wobei diese Mittel gegeneinander austauschbar sind.

18. Vorrichtung nach Anspruch 17, bei welcher die Arbeitsstation zwei gegeneinander austauschbare Kabinen umfasst, und die ersten bzw. zweiten Mittel enthalten.

19. Vorrichtung nach Anspruch 17, bei welcher die ersten und zweiten Mittel in dieselbe Kabine integriert sind.

20. Vorrichtung nach einem der Ansprüche 17 bis 19, bei welcher die ersten und zweiten Mittel jeweilige Kreisförderer umfassen.

21. Vorrichtung nach einem der Ansprüche 1 bis 20, bei welcher der Träger (10) einen unteren Teil (40) umfasst, der unterhalb der Schwenkachse (11) liegt und mit dem Rest des Trägers um eine parallel zu Schwenkachse liegende Achse (41) herum gelenkig verbunden ist, und dieser untere Teil mit Mitteln (43) ausgestattet ist, die es erlauben, das bereits eingetauchte Leitungsteil (1) zu halten.

22. Vorrichtung nach einem der Ansprüche 1 bis 21, die einen Flaschenzug (14) umfasst, der auf dem Träger (10) gemäß der Längsverlegungsachse (12) verstellbar ist und von einer Winde (19) durch die Vermittlung eines Flaschenzugseils angetrieben wird, und der auf seiner Vorderseite einen gelenkigen Verlängerungsarm umfasst, der mit einem öffenbaren Greifer (16) ausgestattet ist, dessen Öffnen von einem Aktor gesteuert wird, um das obere Endstück des neuen Leitungsteils zu greifen, wobei der Verlängerungsarm eine ausreichende Länge besitzt, um die Montageebene (44) zu erreichen, die im Inneren der Arbeitsstation (51) liegt, wobei der Arm mittels eines Aktors in Bewegung gesetzt wird.

23. Vorrichtung nach einem der Ansprüche 1 bis 22, bei welcher der Träger mit Spannern (60) ausgestattet ist, die geeignet sind, eine Leitung oberhalb der Schwenkachse seitlich einzuklemmen, und die verstellbar sind von einer zur anderen von zwei Stellungen, die dem Klemmen einer Leitung entlang einer Hauptachse der Hauptverlegung (12) bzw. dem Klemmen einer Leitung entlang einer sekundären Verlegungsachse, die parallel zur Hauptachse liegt und weiter entfernt als jene zur Schwenkachse des Trägers (11) ist, entsprechen.

24. Vorrichtung nach Anspruch 23, bei welcher der Träger einen den Spannern vorgelagerten Leitungsrichtapparat (93) aufweist, um einen von einer Abwicklung kommenden Leitungsteil in geradliniger Konfiguration zu übergeben.

25. Vorrichtung nach einem der Ansprüche 1 bis 24, welche einen Balken umfasst, der geeignet ist, um den neuen Leitungsteil zu tragen, wobei dieser Balken derart auf das Schiff (2) montiert ist, um um die Schwenkachse (11) schwenken zu können, und wobei er mit Verstellmitteln (320) ausgestattet ist, die geeignet sind den neuen Leitungsteil auf dem Balken (30) zu halten und um entlang diesem bewegt zu werden, um den neuen Leitungsteil in Montagestellung in die Montageebene (44) zu bringen.

26. Vorrichtung nach einem der Ansprüche 1 bis 24, welche einen Balken (30) umfasst, der geeignet ist, eine Leitung zu tragen, wobei dieser Balken derart auf das Schiff (2) montiert ist, um um eine im wesentlichen horizontale Schwenkachse schwenken zu können, wobei die Schwenkachse des Balkens mit der Schwenkachse des Trägers (11) zusammenfällt und Mittel (330, 340) der Zuführung und Führung einer fortlaufenden Leitung umfasst, wobei diese Zuführungsmittel (330, 340) eine derartige Krümmung aufweisen, dass die Leitung auf dem Leitungsträger geführt werden kann, ohne beschädigt zu werden.

27. Vorrichtung nach Anspruch 26, **dadurch gekennzeichnet, dass** die Zuführungsmittel eine Rinne (330) umfassen.

28. Vorrichtung nach Anspruch 26, **dadurch gekennzeichnet, dass** die Zuführungsmittel eine Rolle (340) umfassen.

29. Vorrichtung nach einem der Ansprüche 26 bis 28, **dadurch gekennzeichnet, dass** der Balken (30) ein oberes Endstück in U-Form aufweist.

30. Vorrichtung nach einem der Ansprüche 26 bis 29, **dadurch gekennzeichnet, dass** sie Sperrmittel vom Balken (30) zum Träger umfasst, die eine strukturelle Verbindung (334) umfasst, die mit einer Sperre (335) verbunden ist.

31. Anwendung einer Vorrichtung nach einem der Ansprüche 1 bis 25 zur Verlegung einer Leitung, die durch starre Teilstücke gebildet wird.

32. Anwendung einer Vorrichtung nach einem der Ansprüche 26 bis 30 zur Verlegung einer Leitung, die durch nicht-starre Teilstücke gebildet wird, die auf einem Verteiler aufgerollt sind und bei Bedarf über den Träger abgerollt werden.

33. Anwendung einer Vorrichtung nach einem der Ansprüche 2 und 26 bis 30 zur gleichzeitigen Verlegung einer Leitung, welche durch starre Teilstücke gebildet wird und einer anderen Leitung, die bei Bedarf abgerollt wird, insbesondere einer flexiblen Leitung von großer durchgehender Länge.

## Claims

1. Apparatus for the connection and laying of the successive parts of an offshore supply line from a vessel (2), which comprises on board the vessel (A) a variable inclination supply line support (3) equipped with means (43) for supporting the weight of the already submerged supply line part and keeping available within an assembly plane (44) the above-water end of this supply line part, means (14-16) for receiving a new supply line part in accordance with the longitudinal axis of laying (12) of the supply line and bringing it into the said assembly plane, and guide means, (B) means (100a, 100b; 101a, 101b) constituting a horizontal axis of pivoting (11) of the support on the vessel such that the support can be inclined into the appropriate position for the undersea laying of the new supply line part, (C) means (22-26) for controlling the pivoting of the support and for maintaining it at the requisite inclination, (D) means (20, 31-34) for depositing the new supply line part on the support, and (E) a workstation (51a, 52b) equipped with means for performing the assembly, **characterized in that** this station is carried by the vessel independently of the support and **in that** the said axis of pivoting (11) intersects the said longitudinal axis of laying (12) substantially in the said plane of assembly (44).

2. Apparatus according to Claim 1, which comprises, on the support (10), means (82, 86, 330, 340) that possess a curvature for guiding a continuous supply line, originating from a drum (92), over the support (10).

3. Apparatus according to Claim 1, which comprises a beam (30) and means (31, 34) for adjusting and maintaining the position of the beam (30) when the latter is in an inclined position, the beam also being equipped with means (330, 340) that possess a curvature for guiding a continuous supply line, originating from a drum (92), towards the support (10) when the beam (30) is in this position.

4. Apparatus according to either of Claims 2 and 3, wherein the means (330, 340) possessing a curvature comprise a chute (330).

5. Apparatus according to either of Claims 2 and 3, wherein the means (330, 340) possessing a curvature comprise a pulley (340).

6. Apparatus according to one of Claims 2 to 5, wherein the beam (30) possesses a U-shaped upper end.

7. Apparatus according to one of Claims 2 to 6, wherein the means (334, 335) for maintaining the position of the beam (30) possess means for locking the beam (30) to the support (10) which comprise a structural link (334), associated with a bolt (335).

8. Apparatus according to either of Claims 1 and 2, which possesses a beam (30) adapted to support a rigid section and mounted on the vessel so as to be able to pivot about a substantially horizontal axis of pivoting of the beam, the axis of pivoting of the beam preferably coinciding with the axis of pivoting of the support (11), means (20, 31-34) being provided to control the tilting of the beam between a substantially horizontal starting position, which enables this section to be laid or formed on the beam from a stock, and an inclined transfer position where the section can be transferred to the support (3), which will previously have been brought into its inclined operating position.

9. Apparatus according to one of Claims 1 to 7, wherein the workstation (51a) is displaceable on the vessel.

10. Apparatus according to Claim 9, wherein the supply line support (3) is a tower shaped to allow the displacement of the workstation (51a) within or through the tower.

11. Apparatus according to Claim 9 or 10, wherein the workstation (51a) is displaceable parallel to the longitudinal axis of the vessel.

12. Apparatus according to one of Claims 1 to 11, wherein the workstation (51a) possesses a floor (200) for the movement of personnel and a ceiling (201) or a ceiling-type structure which bears the necessary power supply means for supplying power to welding heads disposed in the vicinity of the assembly plane.

13. Apparatus according to Claim 12, wherein the workstation possesses a turntable (124) which bears the said power supply means.

14. Apparatus according to Claim 13, wherein the turntable (124) possesses a channel for the passage of the new supply line part.

15. Apparatus according to either of Claims 13 and 14, wherein the turntable (124) is capable of translational displacement between an operating position and a retracted position.

16. Apparatus according to one of Claims 13 to 15, wherein the turntable is supplied with electrical power by means of a rotating electrical connector comprising a circular track made from conductive metal and rigidly fixed to the rotating part (124) of the turntable and two sets of brushes (242) rigidly fixed to the guide support (125).

17. Apparatus according to one of Claims 1 to 16, wherein the workstation comprises first means for performing the said assembly and second means for performing ancillary tasks, it being possible for these means to be substituted one for the other.

18. Apparatus according to Claim 17, wherein the workstation comprises two cabins that can be substituted one for the other containing, respectively, the first and second means.

19. Apparatus according to Claim 17, wherein the first and second means are integrated within a single cabin.

20. Apparatus according to one of Claims 17 to 19, wherein the first and the second means possess their own turntables.

21. Apparatus according to one of Claims 1 to 20, wherein the support (10) possesses a low part (40) situated below the said axis of pivoting (11) and articulated on the remainder of the support about an axis (41) parallel to the said axis of pivoting and this low part is equipped with the means (43) which make it possible to retain the part of the supply line (1) which is already submerged.

22. Apparatus according to one of Claims 1 to 21, which comprises a hoist block (14) which is displaceable on the said support (10) in accordance with the said longitudinal axis of laying (12) and actuated by a winch (19) via a hoist cable and which possesses on its front an articulated extension arm (15) equipped with an openable gripper (16) whose aperture is controlled by an actuator in order to grasp the upper end of the new supply line part, the extension arm possessing a sufficient length to reach the assembly plane (44) situated within the workstation (51), the said arm being caused to move by means of an actuator.

23. Apparatus according to one of Claims 1 to 22, wherein the support is equipped with tensioners (60) adapted to grasp a supply line laterally above the said axis of pivoting and displaceable from one to the other of two positions corresponding, respectively, to the grasping of a supply line according to a principal laying axis (12) and the grasping of a supply line according to a secondary laying axis (13) parallel to the principal axis and further than the latter from the axis of pivoting of the support (11).

24. Apparatus according to Claim 23, wherein the support possesses a supply line straightener (93) upstream of the tensioners to restore a recently unwound supply line part to the rectilinear configuration.

25. Apparatus according to one of Claims 1 to 24, which comprises a beam adapted to support the new supply line part, this beam being mounted on the vessel (2) in a manner such as to be able to pivot about the said axis of pivoting (11), and being equipped with displacement means (320) adapted to hold the new supply line part on the beam (30) and to be displaced along the latter, in order to feed the new supply line part into an assembly position in the assembly plane (44).

26. Apparatus according to one of Claims 1 to 24, which comprises a beam (30) adapted to support a supply line, this beam being mounted on the vessel (2) in a manner such as to be able to pivot about a substantially horizontal axis of pivoting of the beam, the axis of pivoting of the beam preferably coinciding with the axis of pivoting of the support (11) and comprising means (330, 340) for feeding and guiding a continuous supply line, these feed means (330, 340) possessing a curvature such that the supply line can be guided on the supply line support without being damaged.

27. Apparatus according to Claim 26, **characterized in that** the feed means comprises a chute (330).

28. Apparatus according to Claim 26, **characterized in that** the feed means comprise a pulley (340).

29. Apparatus according to one of Claims 26 to 28, **characterized in that** the beam (30) possesses a U-shaped upper end.

30. Apparatus according to one of Claims 26 to 29, **characterized in that** it possesses means for locking the beam (30) to the support, comprising a structural link (334), associated with a bolt (335).

31. Application of an apparatus according to one of Claims 1 to 25 to the laying of a supply line formed from rigid sections.

32. Application of an apparatus according to one of Claims 26 to 30 to the laying of a supply line formed from non-rigid sections rolled up on a distributor and unrolled as required onto the support.

33. Application of an apparatus according to one of Claims 2 and 26 to 30 to the simultaneous laying of a supply line comprising rigid sections and of another supply line unrolled as required, in particular from a flexible line of great continuous length.
